# EUROPEAN PATENT APPLICATION

(11) **EP 2 988 201 A1**
(43) Date of publication of application: **24.02.2016**
(21) Application number: 14003864.7
(22) Date of filing: 17.11.2014
(51) Int. Cl.: G06F 3/0488, G06F 3/0484, G06F 17/30

(54) **Mobile terminal and method of controlling the same**

(30) Priority: 18.08.2014 KR 20140106884
(71) Applicant: LG Electronics Inc., Yeongdeungpo-gu Seoul 150-721 (KR)
(72) Inventor: Kim, Hyeyoung, 137-893 Seoul (KR); Koo, Jinmo, 137-893 Seoul (KR); Lee, Dongkyu, 137-893 Seoul (KR); Park, Sewon, 137-893 Seoul (KR); Lee, Shinuk, 137-893 Seoul (KR)
(74) Representative: Beyer, Andreas

(57) **Abstract**

A mobile terminal including a user input device configured to receive an input of text, a display configured to display the text and receive a touch input for selecting at least part of the text, and a controller configured to search for at least one content associated with the selected at least part of the text, and control the display to display a content region including the searched at least one content adjacent the touch input.

## Description

### BACKGROUND OF THE INVENTION

### 1. Field of the Invention

The present invention relates to a mobile terminal including a display unit for inputting information based on a touch input.

### 2. Background of the Invention

A terminal is broadly categorized by mobility into a mobile terminal and a stationary terminal. The mobile terminal is further categorized by portability into a handheld terminal and a vehicle-mounted terminal.

In response to an increasing demand for diversified functions, the terminal has been realized in the form of a multimedia player with multiple functions such as shooting a photographic object as a still image or moving images, reproducing digital audio and video compression files, playing a game, receiving a broadcast or the like. Furthermore, structural and software modifications to the mobile terminal are considered for supporting and improving functions of the mobile terminal.

In addition, a user can input information by applying a touch input to a display unit, and the information is stored in various forms such as the form of images or text. Using this type of functionality, various kinds of contents can be stored by various applications. In order to output relevant contents, an application which is being executed is ended, and another application is activated. That is, several stages are inconveniently performed.

### SUMMARY OF THE INVENTION

Therefore, one aspect of the present invention is to address the above-noted and other problems with the related art.

Another aspect of the present invention is to provide a control method for more simply providing relevant content.

To achieve these and other advantages and in accordance with the purpose of this specification, as embodied and broadly described herein, the present invention provides in one aspect a mobile terminal including a user input device configured to receive an input of text; a display configured to display the text and receive a touch input for selecting at least part of the text; and a controller configured to, in response to selection of the at least part of the text, search for at least one content associated with the selected at least part of the text and to control the display to display a content region including the searched at least one content adjacent the touch input.

In an embodiment of the present invention, selected content is displayed along with the text or instead of the text, based on a touch input applied to the content unit, and thus, a user is simply provided with content associated with a text, and input the content.

In an embodiment of the present invention, the content is displayed in one region of the display unit, based on a type of the touch input applied to the content unit and a touch range, and thus, the user displays the selected content at a desired position.

Further scope of applicability of the present application will become more apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from the detailed description.

### BRIEF DESCRIPTION OF THE DRAWINGS

The accompanying drawings, which are included to provide a further understanding of the invention and are incorporated in and constitute a part of this specification, illustrate embodiments and together with the description serve to explain the principles of the invention.

In the drawings:
FIG. 1A is a block diagram illustrating mobile terminal according to an embodiment of the present invention;
FIGS. 1B and 1C are front and rear perspective diagrams according to an embodiment of the present invention;
FIG. 2 is a flowchart illustrating a method of controlling a mobile terminal according to an embodiment of the present invention;
FIGS. 3A through 3D are a conceptual diagram illustrating a method of controlling a mobile terminal according to an embodiment of the present invention;
FIGS. 4A(a) through 4C(c) are conceptual diagrams illustrating a control method of inputting content;
FIGS. 5A(a) through 5B(c) are conceptual diagrams illustrating a method of outputting content, according to another embodiment;
FIGS. 6A(a) through 6D(b) are conceptual diagrams illustrating a control method of outputting content associated with a text, according to another embodiment;
FIGS. 7A(a) through 7B(d) are conceptual diagrams illustrating a method of providing additional content, according to another embodiment;
FIGS. 8A(a) through 8B(b) are conceptual diagrams illustrating a control method of displaying a text associated with content;
FIGS. 9A(a) through 9C(c) are conceptual diagrams illustrating a control method of outputting content, according to another embodiment; and
FIGA. 10(a) through 10(c) is a conceptual diagram illustrating a control method of providing content, according to another embodiment.

### DETAILED DESCRIPTION OF THE ILLUSTRATED EMBODIMENTS

Description will now be given in detail according to embodiments disclosed herein, with reference to the accompanying drawings. For the sake of brief description with reference to the drawings, the same or equivalent components may be provided with the same or similar reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function.

The accompanying drawings are used to help easily understand various technical features and it should be understood that the embodiments presented herein are not limited by the accompanying drawings. As such, the present invention should be construed to extend to any alterations, equivalents and substitutes in addition to those which are particularly set out in the accompanying drawings. Although the terms first, second, etc. may be used herein to describe various elements, these elements should not be limited by these terms. These terms are generally only used to distinguish one element from another.

In addition, when an element is referred to as being "connected with" another element, the element can be connected with the other element or intervening elements may also be present. In contrast, when an element is referred to as being "directly connected with" another element, there are no intervening elements present.

A singular representation may include a plural representation unless it represents a definitely different meaning from the context. Terms such as "include" or "has" are used herein and should be understood that they are intended to indicate an existence of several components, functions or steps, disclosed in the specification, and it is also understood that greater or fewer components, functions, or steps may likewise be utilized.

A terminal in the present description may include a mobile terminal such as a portable phone, a smart phone, a notebook computer, a digital broadcasting terminal, Personal Digital Assistants (PDA), Portable Multimedia Player (PMP), a navigation system, a slate PC, a tablet PC, an ultra book, a wearable device (e.g., smart watch), a glass-type terminal (e.g., smart glass), a head mounted display (HMD), etc. However, the present invention may be also applicable to a fixed terminal such as a digital TV, a desktop computer and a digital signage, except for specific configurations for mobility.

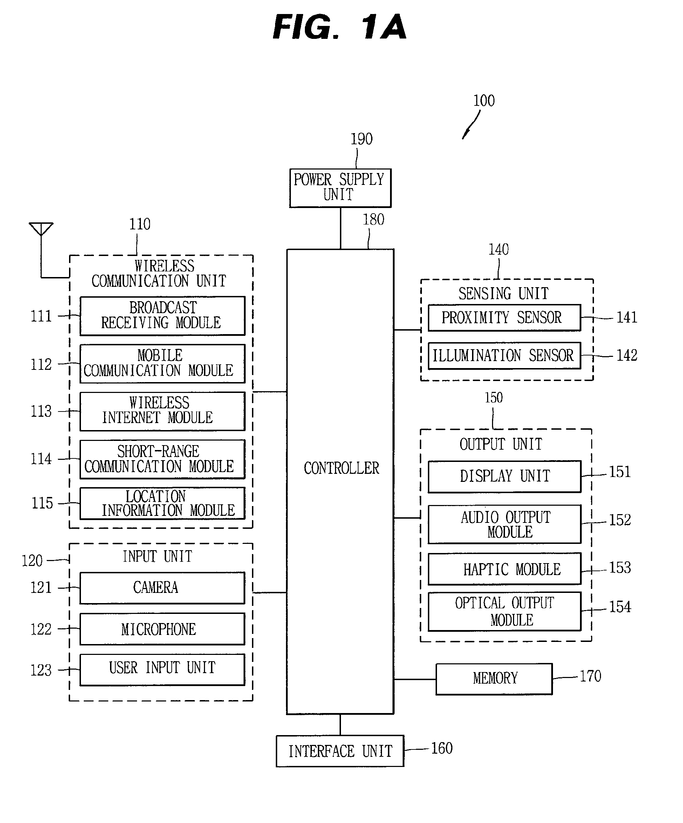

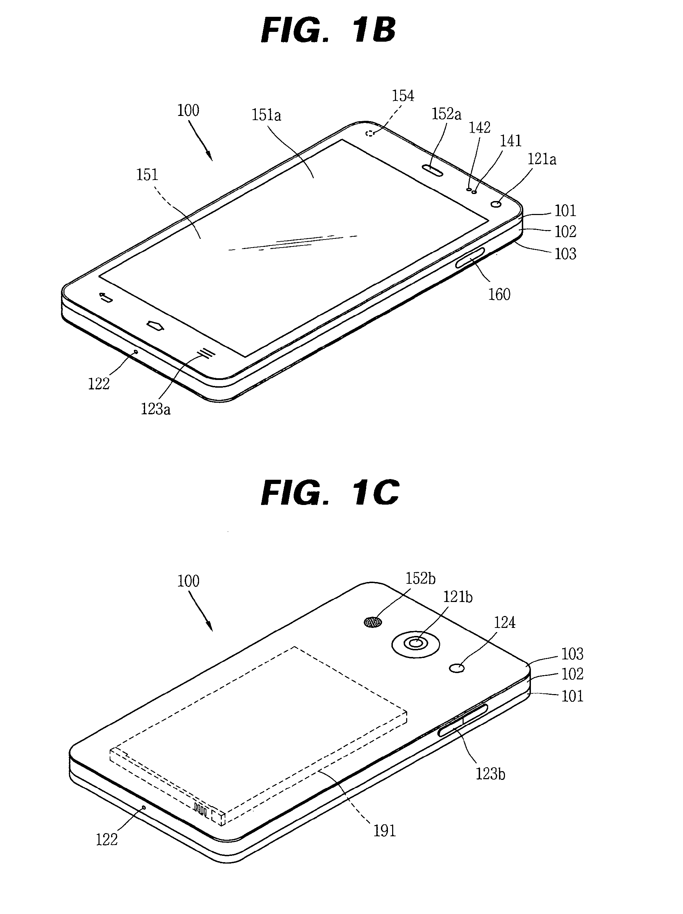

Reference is now made to FIGS. 1A-1C, where FIG. 1A is a block diagram of a mobile terminal according to an embodiment of the present invention, and FIGS. 1B and 1C are conceptual views of one example of the mobile terminal, viewed from different directions.

The mobile terminal 100 is shown having components such as a wireless communication unit 110, an input unit 120, a sensing unit 140, an output unit 150, an interface unit 160, a memory 170, a controller 180, and a power supply unit 190. Implementing all of the illustrated components of FIG. 1A is not a requirement, and greater or fewer components may alternatively be implemented.

Referring now to FIG. 1A, the mobile terminal 100 is shown having wireless communication unit 110 configured with several commonly implemented components. For instance, the wireless communication unit 110 typically includes one or more components which permit wireless communication between the mobile terminal 100 and a wireless communication system or network within which the mobile terminal is located.

The wireless communication unit 110 typically includes one or more modules which permit communications such as wireless communications between the mobile terminal 100 and a wireless communication system, communications between the mobile terminal 100 and another mobile terminal, communications between the mobile terminal 100 and an external server. Further, the wireless communication unit 110 typically includes one or more modules which connect the mobile terminal 100 to one or more networks. To facilitate such communications, the wireless communication unit 110 includes one or more of a broadcast receiving module 111, a mobile communication module 112, a wireless Internet module 113, a short-range communication module 114, and a location information module 115.

The input unit 120 includes a camera 121 for obtaining images or video, a microphone 122, which is one type of audio input device for inputting an audio signal, and a user input unit 123 (for example, a touch key, a push key, a mechanical key, a soft key, and the like) for allowing a user to input information. Data (for example, audio, video, image, and the like) is obtained by the input unit 120 and may be analyzed and processed by controller 180 according to device parameters, user commands, and combinations thereof.

The sensing unit 140 is typically implemented using one or more sensors configured to sense internal information of the mobile terminal, the surrounding environment of the mobile terminal, user information, and the like. For example, in FIG. 1A, the sensing unit 140 is shown having a proximity sensor 141 and an illumination sensor 142. If desired, the sensing unit 140 may alternatively or additionally include other types of sensors or devices, such as a touch sensor, an acceleration sensor, a magnetic sensor, a G-sensor, a gyroscope sensor, a motion sensor, an RGB sensor, an infrared (IR) sensor, a finger scan sensor, a ultrasonic sensor, an optical sensor (for example, camera 121), a microphone 122, a battery gauge, an environment sensor (for example, a barometer, a hygrometer, a thermometer, a radiation detection sensor, a thermal sensor, and a gas sensor, among others), and a chemical sensor (for example, an electronic nose, a health care sensor, a biometric sensor, and the like), to name a few. The mobile terminal 100 may be configured to utilize information obtained from sensing unit 140, and in particular, information obtained from one or more sensors of the sensing unit 140, and combinations thereof.

The output unit 150 is typically configured to output various types of information, such as audio, video, tactile output, and the like. The output unit 150 is shown having a display unit 151, an audio output module 152, a haptic module 153, and an optical output module 154.

The display unit 151 may have an inter-layered structure or an integrated structure with a touch sensor in order to facilitate a touch screen. The touch screen may provide an output interface between the mobile terminal 100 and a user, as well as function as the user input unit 123 which provides an input interface between the mobile terminal 100 and the user.

The interface unit 160 serves as an interface with various types of external devices that can be coupled to the mobile terminal 100. The interface unit 160, for example, may include any of wired or wireless ports, external power supply ports, wired or wireless data ports, memory card ports, ports for connecting a device having an identification module, audio input/output (I/O) ports, video I/O ports, earphone ports, and the like. In some cases, the mobile terminal 100 may perform assorted control functions associated with a connected external device, in response to the external device being connected to the interface unit 160.

The memory 170 is typically implemented to store data to support various functions or features of the mobile terminal 100. For instance, the memory 170 may be configured to store application programs executed in the mobile terminal 100, data or instructions for operations of the mobile terminal 100, and the like. Some of these application programs may be downloaded from an external server via wireless communication. Other application programs may be installed within the mobile terminal 100 at time of manufacturing or shipping, which is typically the case for basic functions of the mobile terminal 100 (for example, receiving a call, placing a call, receiving a message, sending a message, and the like). It is common for application programs to be stored in the memory 170, installed in the mobile terminal 100, and executed by the controller 180 to perform an operation (or function) for the mobile terminal 100.

The controller 180 typically functions to control overall operation of the mobile terminal 100, in addition to the operations associated with the application programs. The controller 180 can provide or process information or functions appropriate for a user by processing signals, data, information and the like, which are input or output by the various components depicted in FIG. 1A, or activating application programs stored in the memory 170. As one example, the controller 180 controls some or all of the components illustrated in FIGS. 1A-1C according to the execution of an application program that have been stored in the memory 170.

The power supply unit 190 can be configured to receive external power or provide internal power in order to supply appropriate power required for operating elements and components included in the mobile terminal 100. The power supply unit 190 may include a battery, and the battery may be configured to be embedded in the terminal body, or configured to be detachable from the terminal body.

Referring still to FIG. 1A, various components depicted in this figure will now be described in more detail. Regarding the wireless communication unit 110, the broadcast receiving module 111 is typically configured to receive a broadcast signal and/or broadcast associated information from an external broadcast managing entity via a broadcast channel. The broadcast channel may include a satellite channel, a terrestrial channel, or both. In some embodiments, two or more broadcast receiving modules 111 may be utilized to facilitate simultaneously receiving of two or more broadcast channels, or to support switching among broadcast channels.

The broadcast managing entity may be implemented using a server or system which generates and transmits a broadcast signal and/or broadcast associated information, or a server which receives a pre-generated broadcast signal and/or broadcast associated information, and sends such items to the mobile terminal. The broadcast signal may be implemented using any of a TV broadcast signal, a radio broadcast signal, a data broadcast signal, and combinations thereof, among others. The broadcast signal in some cases may further include a data broadcast signal combined with a TV or radio broadcast signal.

The broadcast signal may be encoded according to any of a variety of technical standards or broadcasting methods (for example, International Organization for Standardization (ISO), International Electrotechnical Commission (IEC), Digital Video Broadcast (DVB), Advanced Television Systems Committee (ATSC), and the like) for transmission and reception of digital broadcast signals. The broadcast receiving module 111 can receive the digital broadcast signals using a method appropriate for the transmission method utilized.

Examples of broadcast associated information may include information associated with a broadcast channel, a broadcast program, a broadcast event, a broadcast service provider, or the like. The broadcast associated information may also be provided via a mobile communication network, and In this instance, received by the mobile communication module 112.

The broadcast associated information may be implemented in various formats. For instance, broadcast associated information may include an Electronic Program Guide (EPG) of Digital Multimedia Broadcasting (DMB), an Electronic Service Guide (ESG) of Digital Video Broadcast-Handheld (DVB-H), and the like. Broadcast signals and/or broadcast associated information received via the broadcast receiving module 111 may be stored in a suitable device, such as a memory 170.

The mobile communication module 112 can transmit and/or receive wireless signals to and from one or more network entities. Typical examples of a network entity include a base station, an external mobile terminal, a server, and the like. Such network entities form part of a mobile communication network, which is constructed according to technical standards or communication methods for mobile communications (for example, Global System for Mobile Communication (GSM), Code Division Multi Access (CDMA), Wideband CDMA (WCDMA), High Speed Downlink Packet access (HSDPA), Long Term Evolution (LTE), and the like).

Examples of wireless signals transmitted and/or received via the mobile communication module 112 include audio call signals, video (telephony) call signals, or various formats of data to support communication of text and multimedia messages. The wireless Internet module 113 is configured to facilitate wireless Internet access. This module may be internally or externally coupled to the mobile terminal 100. The wireless Internet module 113 may transmit and/or receive wireless signals via communication networks according to wireless Internet technologies.

Examples of such wireless Internet access include Wireless LAN (WLAN), Wireless Fidelity (Wi-Fi), Wi-Fi Direct, Digital Living Network Alliance (DLNA), Wireless Broadband (WiBro), Worldwide Interoperability for Microwave Access (WiMAX), High Speed Downlink Packet Access (HSDPA), HSUPA(High Speed Uplink Packet Access), Long Term Evolution (LTE), LTE-A(Long Term Evolution-Advanced), and the like. The wireless Internet module 113 may transmit/receive data according to one or more of such wireless Internet technologies, and other Internet technologies as well.

In some embodiments, when the wireless Internet access is implemented according to, for example, WiBro, HSDPA, GSM, CDMA, WCDMA, LTE and the like, as part of a mobile communication network, the wireless Internet module 113 performs such wireless Internet access. As such, the Internet module 113 may cooperate with, or function as, the mobile communication module 112.

The short-range communication module 114 is configured to facilitate short-range communications. Suitable technologies for implementing such short-range communications include BLUETOOTHTM, Radio Frequency IDentification (RFID), Infrared Data Association (IrDA), Ultra-WideBand (UWB), ZigBee, Near Field Communication (NFC), Wireless-Fidelity (Wi-Fi), Wi-Fi Direct, Wireless USB(Wireless Universal Serial Bus), and the like. The short-range communication module 114 in general supports wireless communications between the mobile terminal 100 and a wireless communication system, communications between the mobile terminal 100 and another mobile terminal 100, or communications between the mobile terminal and a network where another mobile terminal 100 (or an external server) is located, via wireless area networks. One example of the wireless area networks is a wireless personal area networks.

In some embodiments, another mobile terminal (which may be configured similarly to mobile terminal 100) may be a wearable device, for example, a smart watch, a smart glass or a head mounted display (HMD), which can exchange data with the mobile terminal 100 (or otherwise cooperate with the mobile terminal 100). The short-range communication module 114 may sense or recognize the wearable device, and permit communication between the wearable device and the mobile terminal 100. In addition, when the sensed wearable device is a device which is authenticated to communicate with the mobile terminal 100, the controller 180, for example, may cause transmission of data processed in the mobile terminal 100 to the wearable device via the short-range communication module 114. Hence, a user of the wearable device may use the data processed in the mobile terminal 100 on the wearable device. For example, when a call is received in the mobile terminal 100, the user may answer the call using the wearable device. Also, when a message is received in the mobile terminal 100, the user can check the received message using the wearable device.

The location information module 115 is generally configured to detect, calculate, derive or otherwise identify a position of the mobile terminal. As an example, the location information module 115 includes a Global Position System (GPS) module, a Wi-Fi module, or both. If desired, the location information module 115 may alternatively or additionally function with any of the other modules of the wireless communication unit 110 to obtain data related to the position of the mobile terminal.

As one example, when the mobile terminal uses a GPS module, a position of the mobile terminal may be acquired using a signal sent from a GPS satellite. As another example, when the mobile terminal uses the Wi-Fi module, a position of the mobile terminal can be acquired based on information related to a wireless access point (AP) which transmits or receives a wireless signal to or from the Wi-Fi module.

The input unit 120 may be configured to permit various types of input to the mobile terminal 120. Examples of such input include audio, image, video, data, and user input. Image and video input is often obtained using one or more cameras 121. Such cameras 121 may process image frames of still pictures or video obtained by image sensors in a video or image capture mode. The processed image frames can be displayed on the display unit 151 or stored in memory 170. In some instances, the cameras 121 may be arranged in a matrix configuration to permit a plurality of images having various angles or focal points to be input to the mobile terminal 100. As another example, the cameras 121 may be located in a stereoscopic arrangement to acquire left and right images for implementing a stereoscopic image.

The microphone 122 is generally implemented to permit audio input to the mobile terminal 100. The audio input can be processed in various manners according to a function being executed in the mobile terminal 100. If desired, the microphone 122 may include assorted noise removing algorithms to remove unwanted noise generated in the course of receiving the external audio.

The user input unit 123 is a component that permits input by a user. Such user input may enable the controller 180 to control operation of the mobile terminal 100. The user input unit 123 may include one or more of a mechanical input element (for example, a key, a button located on a front and/or rear surface or a side surface of the mobile terminal 100, a dome switch, a jog wheel, a jog switch, and the like), or a touch-sensitive input, among others. As one example, the touch-sensitive input may be a virtual key or a soft key, which is displayed on a touch screen through software processing, or a touch key which is located on the mobile terminal at a location that is other than the touch screen. Further, the virtual key or the visual key may be displayed on the touch screen in various shapes, for example, graphic, text, icon, video, or a combination thereof.

The sensing unit 140 is generally configured to sense one or more of internal information of the mobile terminal, surrounding environment information of the mobile terminal, user information, or the like. The controller 180 generally cooperates with the sending unit 140 to control operation of the mobile terminal 100 or execute data processing, a function or an operation associated with an application program installed in the mobile terminal based on the sensing provided by the sensing unit 140. The sensing unit 140 may be implemented using any of a variety of sensors, some of which will now be described in more detail.

The proximity sensor 141 may include a sensor to sense presence or absence of an object approaching a surface, or an object located near a surface, by using an electromagnetic field, infrared rays, or the like without a mechanical contact. The proximity sensor 141 may be arranged at an inner region of the mobile terminal covered by the touch screen, or near the touch screen.

The proximity sensor 141, for example, may include any of a transmissive type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and the like. When the touch screen is implemented as a capacitance type, the proximity sensor 141 can sense proximity of a pointer relative to the touch screen by changes of an electromagnetic field, which is responsive to an approach of an object with conductivity. In this instance, the touch screen (touch sensor) may also be categorized as a proximity sensor.

The term "proximity touch" will often be referred to herein to denote the scenario in which a pointer is positioned to be proximate to the touch screen without contacting the touch screen. The term "contact touch" will often be referred to herein to denote the scenario in which a pointer makes physical contact with the touch screen. For the position corresponding to the proximity touch of the pointer relative to the touch screen, such position will correspond to a position where the pointer is perpendicular to the touch screen. The proximity sensor 141 may sense proximity touch, and proximity touch patterns (for example, distance, direction, speed, time, position, moving status, and the like).

In general, controller 180 processes data corresponding to proximity touches and proximity touch patterns sensed by the proximity sensor 141, and cause output of visual information on the touch screen. In addition, the controller 180 can control the mobile terminal 100 to execute different operations or process different data according to whether a touch with respect to a point on the touch screen is either a proximity touch or a contact touch.

A touch sensor can sense a touch applied to the touch screen, such as display unit 151, using any of a variety of touch methods. Examples of such touch methods include a resistive type, a capacitive type, an infrared type, and a magnetic field type, among others. As one example, the touch sensor may be configured to convert changes of pressure applied to a specific part of the display unit 151, or convert capacitance occurring at a specific part of the display unit 151, into electric input signals. The touch sensor may also be configured to sense not only a touched position and a touched area, but also touch pressure and/or touch capacitance. A touch object is generally used to apply a touch input to the touch sensor. Examples of typical touch objects include a finger, a touch pen, a stylus pen, a pointer, or the like.

When a touch input is sensed by a touch sensor, corresponding signals may be transmitted to a touch controller. The touch controller may process the received signals, and then transmit corresponding data to the controller 180. Accordingly, the controller 180 can sense which region of the display unit 151 has been touched. Here, the touch controller may be a component separate from the controller 180, the controller 180, and combinations thereof.

In some embodiments, the controller 180 can execute the same or different controls according to a type of touch object that touches the touch screen or a touch key provided in addition to the touch screen. Whether to execute the same or different control according to the object which provides a touch input may be decided based on a current operating state of the mobile terminal 100 or a currently executed application program, for example.

The touch sensor and the proximity sensor may be implemented individually, or in combination, to sense various types of touches. Such touches includes a short (or tap) touch, a long touch, a multi-touch, a drag touch, a flick touch, a pinch-in touch, a pinch-out touch, a swipe touch, a hovering touch, and the like.

If desired, an ultrasonic sensor may be implemented to recognize position information relating to a touch object using ultrasonic waves. The controller 180, for example, may calculate a position of a wave generation source based on information sensed by an illumination sensor and a plurality of ultrasonic sensors. Since light is much faster than ultrasonic waves, the time for which the light reaches the optical sensor is much shorter than the time for which the ultrasonic wave reaches the ultrasonic sensor. The position of the wave generation source may be calculated using this fact. For instance, the position of the wave generation source may be calculated using the time difference from the time that the ultrasonic wave reaches the sensor based on the light as a reference signal.

The camera 121 typically includes at least one a camera sensor (CCD, CMOS etc.), a photo sensor (or image sensors), and a laser sensor. Implementing the camera 121 with a laser sensor can allow detection of a touch of a physical object with respect to a 3D stereoscopic image. The photo sensor may be laminated on, or overlapped with, the mobile terminal. The photo sensor may be configured to scan movement of the physical object in proximity to the touch screen. In more detail, the photo sensor may include photo diodes and transistors at rows and columns to scan content received at the photo sensor using an electrical signal which changes according to the quantity of applied light. Namely, the photo sensor may calculate the coordinates of the physical object according to variation of light to thus obtain position information of the physical object.

The display unit 151 is generally configured to output information processed in the mobile terminal 100. For example, the display unit 151 may display execution screen information of an application program executing at the mobile terminal 100 or user interface (UI) and graphic user interface (GUI) information in response to the execution screen information.

In some embodiments, the display unit 151 may be implemented as a stereoscopic display unit for displaying stereoscopic images. A typical stereoscopic display unit may employ a stereoscopic display scheme such as a stereoscopic scheme (a glass scheme), an auto-stereoscopic scheme (glassless scheme), a projection scheme (holographic scheme), or the like.

The audio output module 152 is generally configured to output audio data. Such audio data may be obtained from any of a number of different sources, such that the audio data may be received from the wireless communication unit 110 or may have been stored in the memory 170. The audio data may be output during modes such as a signal reception mode, a call mode, a record mode, a voice recognition mode, a broadcast reception mode, and the like. The audio output module 152 can provide audible output related to a particular function (e.g., a call signal reception sound, a message reception sound, etc.) performed by the mobile terminal 100. The audio output module 152 may also be implemented as a receiver, a speaker, a buzzer, or the like.

A haptic module 153 can be configured to generate various tactile effects that a user feels, perceive, or otherwise experience. A typical example of a tactile effect generated by the haptic module 153 is vibration. The strength, pattern and the like of the vibration generated by the haptic module 153 can be controlled by user selection or setting by the controller. For example, the haptic module 153 may output different vibrations in a combining manner or a sequential manner.

Besides vibration, the haptic module 153 can generate various other tactile effects, including an effect by stimulation such as a pin arrangement vertically moving to contact skin, a spray force or suction force of air through a jet orifice or a suction opening, a touch to the skin, a contact of an electrode, electrostatic force, an effect by reproducing the sense of cold and warmth using an element that can absorb or generate heat, and the like.

The haptic module 153 can also be implemented to allow the user to feel a tactile effect through a muscle sensation such as the user's fingers or arm, as well as transferring the tactile effect through direct contact. Two or more haptic modules 153 may be provided according to the particular configuration of the mobile terminal 100.

An optical output module 154 can output a signal for indicating an event generation using light of a light source. Examples of events generated in the mobile terminal 100 may include message reception, call signal reception, a missed call, an alarm, a schedule notice, an email reception, information reception through an application, and the like.

A signal output by the optical output module 154 may be implemented so the mobile terminal emits monochromatic light or light with a plurality of colors. The signal output may be terminated as the mobile terminal senses that a user has checked the generated event, for example.

The interface unit 160 serves as an interface for external devices to be connected with the mobile terminal 100. For example, the interface unit 160 can receive data transmitted from an external device, receive power to transfer to elements and components within the mobile terminal 100, or transmit internal data of the mobile terminal 100 to such external device. The interface unit 160 may include wired or wireless headset ports, external power supply ports, wired or wireless data ports, memory card ports, ports for connecting a device having an identification module, audio input/output (I/O) ports, video I/O ports, earphone ports, or the like.

The identification module may be a chip that stores various information for authenticating authority of using the mobile terminal 100 and may include a user identity module (UIM), a subscriber identity module (SIM), a universal subscriber identity module (USIM), and the like. In addition, the device having the identification module (also referred to herein as an "identifying device") may take the form of a smart card. Accordingly, the identifying device can be connected with the terminal 100 via the interface unit 160.

When the mobile terminal 100 is connected with an external cradle, the interface unit 160 can serve as a passage to allow power from the cradle to be supplied to the mobile terminal 100 or may serve as a passage to allow various command signals input by the user from the cradle to be transferred to the mobile terminal there through. Various command signals or power input from the cradle may operate as signals for recognizing that the mobile terminal is properly mounted on the cradle.

The memory 170 can store programs to support operations of the controller 180 and store input/output data (for example, phonebook, messages, still images, videos, etc.). The memory 170 may store data related to various patterns of vibrations and audio which are output in response to touch inputs on the touch screen.

The memory 170 may include one or more types of storage mediums including a Flash memory, a hard disk, a solid state disk, a silicon disk, a multimedia card micro type, a card-type memory (e.g., SD or DX memory, etc.), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, an optical disk, and the like. The mobile terminal 100 may also be operated in relation to a network storage device that performs the storage function of the memory 170 over a network, such as the Internet.

The controller 180 can typically control the general operations of the mobile terminal 100. For example, the controller 180 can set or release a lock state for restricting a user from inputting a control command with respect to applications when a status of the mobile terminal meets a preset condition.

The controller 180 can also perform the controlling and processing associated with voice calls, data communications, video calls, and the like, or perform pattern recognition processing to recognize a handwriting input or a picture drawing input performed on the touch screen as characters or images, respectively. In addition, the controller 180 can control one or a combination of those components in order to implement various embodiments disclosed herein.

The power supply unit 190 receives external power or provide internal power and supply the appropriate power required for operating respective elements and components included in the mobile terminal 100. The power supply unit 190 may include a battery, which is typically rechargeable or be detachably coupled to the terminal body for charging.

The power supply unit 190 may include a connection port. The connection port may be configured as one example of the interface unit 160 to which an external charger for supplying power to recharge the battery is electrically connected. As another example, the power supply unit 190 may be configured to recharge the battery in a wireless manner without use of the connection port. In this example, the power supply unit 190 can receive power, transferred from an external wireless power transmitter, using at least one of an inductive coupling method which is based on magnetic induction or a magnetic resonance coupling method which is based on electromagnetic resonance. Various embodiments described herein may be implemented in a computer-readable medium, a machine-readable medium, or similar medium using, for example, software, hardware, or any combination thereof.

Referring now to FIGS. 1B and 1C, the mobile terminal 100 is described with reference to a bar-type terminal body. However, the mobile terminal 100 may alternatively be implemented in any of a variety of different configurations. Examples of such configurations include watch-type, clip-type, glasses-type, or as a folder-type, flip-type, slide-type, swing-type, and swivel-type in which two and more bodies are combined with each other in a relatively movable manner, and combinations thereof. Discussion herein will often relate to a particular type of mobile terminal (for example, bar-type, watch-type, glasses-type, and the like). However, such teachings with regard to a particular type of mobile terminal will generally apply to other types of mobile terminals as well.

The mobile terminal 100 will generally include a case (for example, frame, housing, cover, and the like) forming the appearance of the terminal. In this embodiment, the case is formed using a front case 101 and a rear case 102. Various electronic components are incorporated into a space formed between the front case 101 and the rear case 102. At least one middle case may be additionally positioned between the front case 101 and the rear case 102.

The display unit 151 is shown located on the front side of the terminal body to output information. As illustrated, a window 151a of the display unit 151 may be mounted to the front case 101 to form the front surface of the terminal body together with the front case 101.

In some embodiments, electronic components may also be mounted to the rear case 102. Examples of such electronic components include a detachable battery 191, an identification module, a memory card, and the like. Rear cover 103 is shown covering the electronic components, and this cover may be detachably coupled to the rear case 102. Therefore, when the rear cover 103 is detached from the rear case 102, the electronic components mounted to the rear case 102 are externally exposed.

As illustrated, when the rear cover 103 is coupled to the rear case 102, a side surface of the rear case 102 is partially exposed. In some cases, upon the coupling, the rear case 102 may also be completely shielded by the rear cover 103. In some embodiments, the rear cover 103 may include an opening for externally exposing a camera 121b or an audio output module 152b.

The cases 101, 102, 103 may be formed by injection-molding synthetic resin or may be formed of a metal, for example, stainless steel (STS), aluminum (Al), titanium (Ti), or the like. As an alternative to the example in which the plurality of cases form an inner space for accommodating components, the mobile terminal 100 may be configured such that one case forms the inner space. In this example, a mobile terminal 100 having a uni-body is formed so synthetic resin or metal extends from a side surface to a rear surface.

If desired, the mobile terminal 100 may include a waterproofing unit for preventing introduction of water into the terminal body. For example, the waterproofing unit may include a waterproofing member which is located between the window 151a and the front case 101, between the front case 101 and the rear case 102, or between the rear case 102 and the rear cover 103, to hermetically seal an inner space when those cases are coupled.

The display unit 151, the first audio output module 152a, the second audio output module 152b, the proximity sensor 141, the illumination sensor 142, the optical output module 154, a first camera 121a, a second camera 121b, the first manipulation unit 123a, the second manipulation unit 123b, the microphone 122, the interface 160, etc. may be provided at the mobile terminal 100.

As shown in FIGS. 1B and 1C, the display unit 151, the first audio output module 152a, the proximity sensor 141, the illumination sensor 142, the optical output module 154, the first camera 121a and the first manipulation unit 123a are arranged on a front surface of the terminal body. The second manipulation unit 123b, the microphone 122 and the interface 160 are arranged on side surfaces of the terminal body. And the second audio output module 152b and the second camera 121b are arranged on a rear surface of the terminal body.

However, alternative arrangements are possible and within the teachings of the instant invention. Some components may be omitted or rearranged. For example, the first manipulation unit 123a may be located on another surface of the terminal body, and the second audio output module 152b may be located on the side surface of the terminal body.

The display unit 151 outputs information processed in the mobile terminal 100. The display unit 151 may be implemented using one or more suitable mobile terminals. Examples of such suitable mobile terminals include a liquid crystal display (LCD), a thin film transistor-liquid crystal display (TFT-LCD), an organic light emitting diode (OLED), a flexible display, a 3-dimensional (3D) display, an e-ink display, and combinations thereof.

The display unit 151 may be implemented using two mobile terminals, which can implement the same or different display technology. For instance, a plurality of the display units 151 may be arranged on one side, either spaced apart from each other, or these devices may be integrated, or these devices may be arranged on different surfaces.

The display unit 151 may also include a touch sensor which senses a touch input received at the display unit. When a touch is input to the display unit 151, the touch sensor may be configured to sense this touch and the controller 180, for example, may generate a control command or other signal corresponding to the touch. The content which is input in the touching manner may be a text or numerical value, or a menu item which can be indicated or designated in various modes.

The touch sensor may be configured in a form of a film having a touch pattern, disposed between the window 151a and a display on a rear surface of the window 151a, or a metal wire which is patterned directly on the rear surface of the window 151a. Alternatively, the touch sensor may be integrally formed with the display. For example, the touch sensor may be disposed on a substrate of the display or within the display.

The display unit 151 may also form a touch screen together with the touch sensor. Here, the touch screen may serve as the user input unit 123 (see FIG. 1A). Therefore, the touch screen may replace at least some of the functions of the first manipulation unit 123a. The first audio output module 152a may be implemented in the form of a receiver, and the second audio output module 152b may be implemented in the form of a loud speaker to output voice audio, alarm sounds, multimedia audio reproduction, and the like.

The window 151a of the display unit 151 will typically include an aperture to permit audio generated by the first audio output module 152a to pass. One alternative is to allow audio to be released along an assembly gap between the structural bodies (for example, a gap between the window 151a and the front case 101). In this instance, a hole independently formed to output audio sounds may not be seen or is otherwise hidden in terms of appearance, thereby further simplifying the appearance and manufacturing of the mobile terminal 100.

The optical output module 154 can be configured to output light for indicating an event generation. Examples of such events include a message reception, a call signal reception, a missed call, an alarm, a schedule notice, an email reception, information reception through an application, and the like. When a user has checked a generated event, the controller can control the optical output unit 154 to stop the light output.

The first camera 121a can process image frames such as still or moving images obtained by the image sensor in a capture mode or a video call mode. The processed image frames can then be displayed on the display unit 151 or stored in the memory 170.

The first and second manipulation units 123a and 123b are examples of the user input unit 123, which may be manipulated by a user to provide input to the mobile terminal 100. The first and second manipulation units 123a and 123b may also be commonly referred to as a manipulating portion, and may employ any tactile method that allows the user to perform manipulation such as touch, push, scroll, or the like. The first and second manipulation units 123a and 123b may be implemented in a user's non-tactile manner, e.g., by a proximity touch, a hovering touch, etc.

FIG. 1B illustrates the first manipulation unit 123a as a touch key, but possible alternatives include a mechanical key, a push key, a touch key, and combinations thereof. Input received at the first and second manipulation units 123a and 123b may be used in various ways. For example, the first manipulation unit 123a may be used by the user to provide an input to a menu, home key, cancel, search, or the like, and the second manipulation unit 123b may be used by the user to provide an input to control a volume level being output from the first or second audio output modules 152a or 152b, to switch to a touch recognition mode of the display unit 151, or the like.

As another example of the user input unit 123, a rear input unit may be located on the rear surface of the terminal body. The rear input unit can be manipulated by a user to provide input to the mobile terminal 100. The input may be used in a variety of different ways. For example, the rear input unit may be used by the user to provide an input for power on/off, start, end, scroll, control volume level being output from the first or second audio output modules 152a or 152b, switch to a touch recognition mode of the display unit 151, and the like. The rear input unit may be configured to permit touch input, a push input, or combinations thereof.

The rear input unit may be located to overlap the display unit 151 of the front side in a thickness direction of the terminal body. As one example, the rear input unit may be located on an upper end portion of the rear side of the terminal body such that a user can easily manipulate it using a forefinger when the user grabs the terminal body with one hand. Alternatively, the rear input unit can be positioned at most any location of the rear side of the terminal body.

Embodiments that include the rear input unit may implement some or all of the functionality of the first manipulation unit 123a in the rear input unit. As such, in situations where the first manipulation unit 123a is omitted from the front side, the display unit 151 can have a larger screen. As a further alternative, the mobile terminal 100 may include a finger scan sensor which scans a user's fingerprint. The controller 180 can then use fingerprint information sensed by the finger scan sensor as part of an authentication procedure. The finger scan sensor may also be installed in the display unit 151 or implemented in the user input unit 123.

The microphone 122 is shown located at an end of the mobile terminal 100, but other locations are possible. If desired, multiple microphones may be implemented, with such an arrangement permitting the receiving of stereo sounds.

The interface unit 160 may serve as a path allowing the mobile terminal 100 to interface with external devices. For example, the interface unit 160 may include one or more of a connection terminal for connecting to another device (for example, an earphone, an external speaker, or the like), a port for near field communication (for example, an Infrared Data Association (IrDA) port, a Bluetooth port, a wireless LAN port, and the like), or a power supply terminal for supplying power to the mobile terminal 100. The interface unit 160 may be implemented in the form of a socket for accommodating an external card, such as Subscriber Identification Module (SIM), User Identity Module (UIM), or a memory card for information storage.

The second camera 121b is shown located at the rear side of the terminal body and includes an image capturing direction that is substantially opposite to the image capturing direction of the first camera unit 121a. If desired, second camera 121a may alternatively be located at other locations, or made to be moveable, in order to have a different image capturing direction from that which is shown.

The second camera 121b can include a plurality of lenses arranged along at least one line. The plurality of lenses may also be arranged in a matrix configuration. The cameras may be referred to as an "array camera." When the second camera 121b is implemented as an array camera, images may be captured in various manners using the plurality of lenses and images with better qualities.

As shown in FIG. 1C, a flash 124 is shown adjacent to the second camera 121b. When an image of a subject is captured with the camera 121b, the flash 124 may illuminate the subject. As shown in FIG. 1C, the second audio output module 152b can be located on the terminal body. The second audio output module 152b may implement stereophonic sound functions in conjunction with the first audio output module 152a, and may be also used for implementing a speaker phone mode for call communication.

At least one antenna for wireless communication may be located on the terminal body. The antenna may be installed in the terminal body or formed by the case. For example, an antenna which configures a part of the broadcast receiving module 111 (refer to FIG. 1A) may be retractable into the terminal body. Alternatively, an antenna may be formed using a film attached to an inner surface of the rear cover 103, or a case that includes a conductive material.

A power supply unit 190 for supplying power to the mobile terminal 100 may include a battery 191, which is mounted in the terminal body or detachably coupled to an outside of the terminal body. The battery 191 may receive power via a power source cable connected to the interface unit 160. Also, the battery 191 can be recharged in a wireless manner using a wireless charger. Wireless charging may be implemented by magnetic induction or electromagnetic resonance.

The rear cover 103 is shown coupled to the rear case 102 for shielding the battery 191, to prevent separation of the battery 191, and to protect the battery 191 from an external impact or from foreign material. When the battery 191 is detachable from the terminal body, the rear case 103 may be detachably coupled to the rear case 102.

An accessory for protecting an appearance or assisting or extending the functions of the mobile terminal 100 can also be provided on the mobile terminal 100. As one example of an accessory, a cover or pouch for covering or accommodating at least one surface of the mobile terminal 100 may be provided. The cover or pouch may cooperate with the display unit 151 to extend the function of the mobile terminal 100. Another example of the accessory is a touch pen for assisting or extending a touch input to a touch screen.

A mobile terminal 100 according to an embodiment of the present invention includes a display unit 151 that receives a user's touch input for inputting a text, and outputs an input text. The display unit 151 is controlled to output the text along with content associated with the text. Hereinafter, a method of providing content associated with a text input by a user will be described in detail.

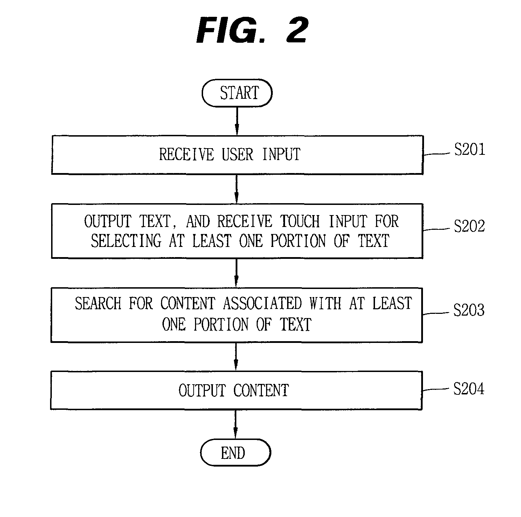

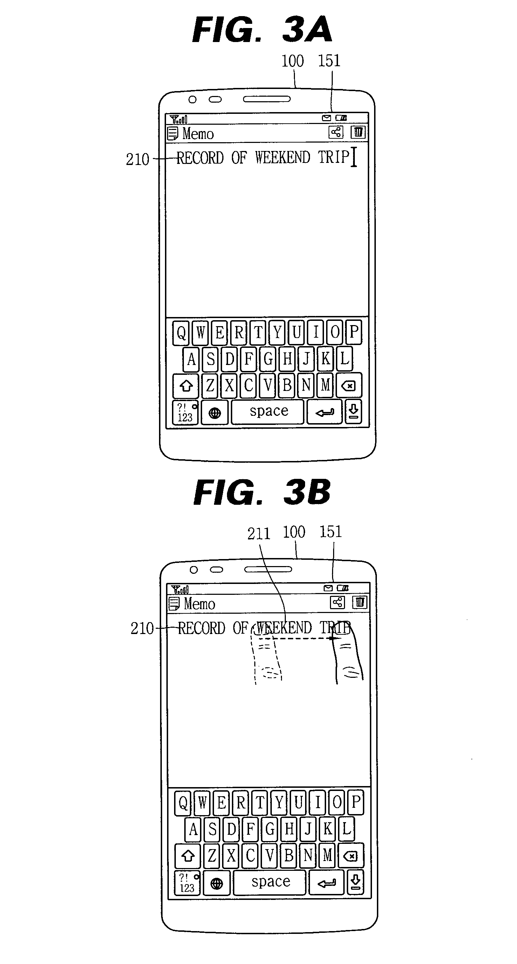

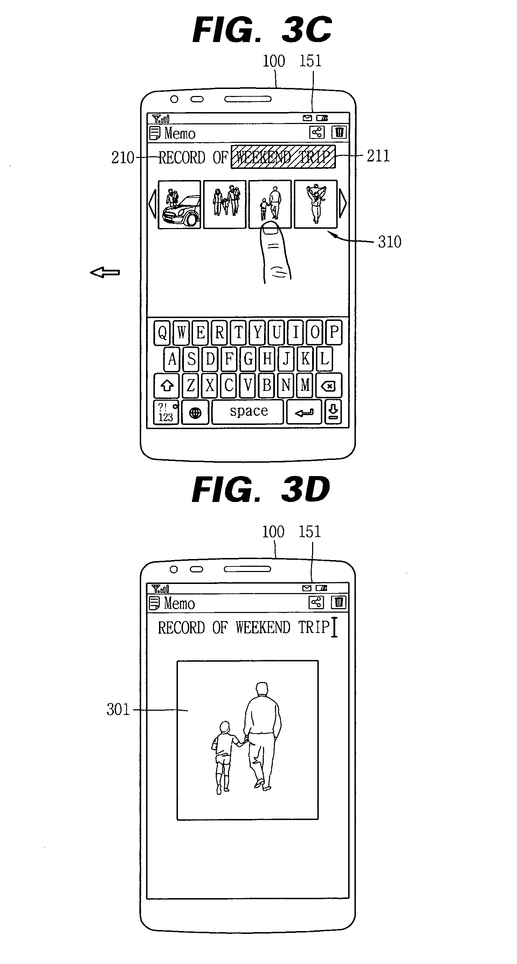

FIG. 2 is a flowchart and FIGS. 3A through 3D are conceptual diagrams illustrating a method of controlling a mobile terminal according to an embodiment of the present invention. In operation S201, a user input unit 123 receives text. For example, the user input unit 123 may correspond to a touch pad included in the display unit 151. For example, the text may be input by a touch input applied to a virtual keyboard which is displayed by the display unit 151, a handwriting input based on a path of a user's touch input, or as the user's voice applied to a microphone 122. That is, a method of inputting the text is not limited thereto.

In operation S202, the display unit 151 outputs the text, and receives a touch input for selecting at least some of the text. Referring to FIG. 3A, the controller 180 executes a predetermined application for outputting the text, and an execution screen of the application includes a virtual keyboard for inputting the text and an output region for the text. The text is displayed in order where the text is input to the output region.

The controller 180 can select at least some of the text, based on a continuous touch input which is applied to the display unit 151 after the text is output. Referring to FIG. 3B, the continuous touch input may be applied to the input text. That is, the controller 180 can select a first text 211 from among text 210 displayed by the display unit 151, based on a dragging type touch input applied to the first text 211.

In more detail, while a touch input is being input to the text 210, the controller 180 can control the display unit 151 so that the text 210 is changed in shape and output. Also, the controller 180 can release the selection when a touch input, which is continuously applied to the text 210, is again applied to the text 210 in an opposite direction.

When the first text 211 of the text 210 is selected based on the touch input, the controller 180 searches for content associated with the text 210, in operation S203. Here, the content may correspond to an image, a video, another text, contact information, execution information included in another application, or result information based on a search engine. The execution information included in the application may correspond to map information of a map application and various kinds of storage files stored by a user.

The controller 180 can analyze the text to search for contents. Further, the controller 180 can search for content which is stored along with at least some of the text, or analyze a meaning included in the text to search for content associated with the text.

For example, when the first text 211 of the text 210 corresponds to "weekend trip," the controller 180 can search for, in a memory 170, an image which is stored along with a phrase "weekend trip," or may search for an image including information associated with "trip" among images stored in "weekend." Alternatively, the controller 180 can define the text as keywords, and drive a specific application. For example, the controller 180 can drive a search engine application by using "weekend trip," selected by the user, as keywords, and provide at least some of search results as relevant content.

The content may correspond to voice data including the text, a map which indicates a position corresponding to the text, and an activity log based on an application including the text. A search range for analyzing the text to search for the content may correspond to the memory 170 of the mobile terminal 100, web search using wireless communication, or a server associated with an application. The controller 180 can set the search range for searching for the content or designate a priority, based on a user's setting. For example, based on the user's setting, the controller 180 can preferentially search for the content in the memory 170 by using the text, or when there is not the content or the number of searched contents is less than a predetermined number, the controller 180 can perform control so as to search for the associated content in the server.

In operation S204, the controller 180 controls the display unit 151 so as to display the searched content. The controller 180 controls the display unit 151 so as to display a first content unit 310 including a plurality of contents associated with the text.

Referring to FIG. 3C, the first content unit 310 may be composed of a plurality of images. The first content unit 310 may be composed of a plurality of thumbnail images which are arranged in one row. Also, the first content unit 310 may further include an icon that receives a user's touch input for outputting additional content included in the first content unit 310. The user may be provided with the additional content by applying the touch input to the icon, or may be provided with the additional content according to a continuous touch input which is applied to the first content unit 310 in one direction.

The first content unit 310 may be displayed adjacent to one region in which the touch input applied to the text 210 is released. The first content unit 310 may be displayed adjacent to the first text 211. Based on the touch input applied to the first content unit 310, the controller 180 selects some of the plurality of contents, and controls the display unit 151 so as to display the selected content in the display unit 151 along with the text. Based on the touch input applied to the first content unit 310, the controller 180 selects at least one content, and controls the display unit 151 so as to display the selected content. For example, the controller 180 controls the display unit 151 so as to display the content to be adjacent to the selected first text 211.

The controller 180 controls the display unit 151 so as to select and display one content 301 included in the first content unit 310, based on a touch input applied to the one content. When the one content 301 is selected, the controller 180 can control the display unit 151 so as to limit an output of the first content unit 310. Alternatively, when a touch input is applied to another region of the display unit 151 when the first content unit 310 is displayed, the control unit 151 may control the display unit 151 in order for the first content unit 310 to disappear.

The selected one content 301 may be displayed in a predetermined size in the display unit 151. A size in which selected content is displayed may be changed based on a user's setting.

According to an embodiment of the present invention, the controller 180 searches for contents associated with the selected text, and provides the searched contents along with the text. That is, an operation which ends an activated application or executes another application is not performed for searching for relevant content. Accordingly, a user can more simply search for desired content, and input the searched content along with a text.

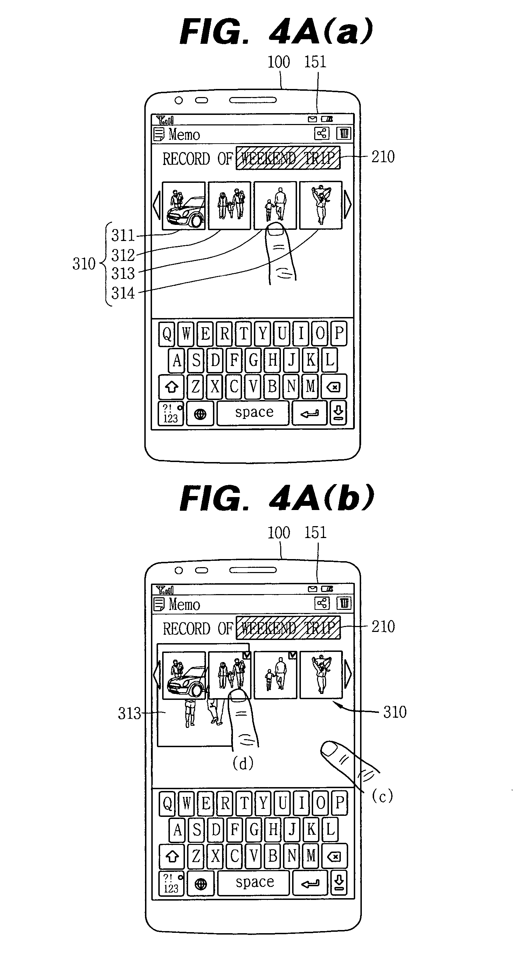

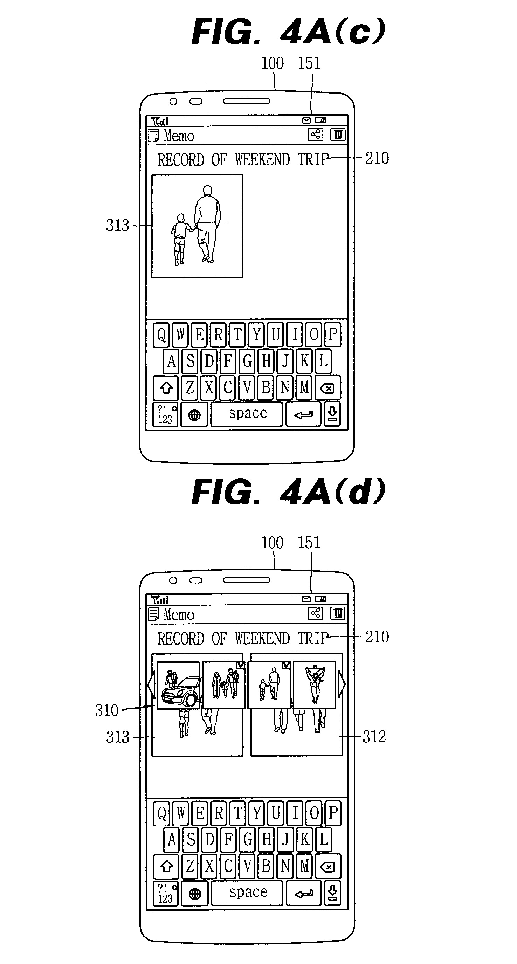

Next, FIGS. 4A(a) to 4C(c) are conceptual diagrams illustrating a control method of inputting content. A method of inputting a plurality of contents along with text will be described in detail with reference to FIGS. 4A(a) through. Referring to FIG.S. 4A(a) through 4A(d), text 210 is displayed in the display unit 151, and some of the text 210 is selected based on a user's touch input. The controller 180 outputs a first content unit 310 associated with the selected some content. The first content unit 310 may include images of first to fourth content 311 to 314. The images of the first to fourth content 311 to 314 may be displayed adjacent to the selected text, and may be arranged in one row.

The controller 180 displays the third content 313 of the first content unit 310 in a region adjacent to the selected text, based on a touch input applied to the third content 313. The third content 313 may be displayed to overlap the first content unit 310. Also, the controller 180 can output a mark portion, indicating the content being selected, onto the image of the third content 313 of the first content unit 310.

Referring to FIG. 4A(B) and 4A(D), when the third content 313 is displayed, the controller 180 controls the display unit 151 so as to display the second content 312 of the first content unit 310 to be adjacent to the text 210, based on a touch input which is additionally applied to the image of the second content 312. For example, the second and third content 312 and 313 may be displayed adjacent to each other. Also, the display unit 151 displays a mark portion, indicating selection, on the image of the second content 212. The user can recognize that corresponding content is displayed in the display unit 151, based on the mark portion displayed on the image of the second content 212.

Referring to FIGS. 4A(B) and 4A(C), when the third content 313 is displayed, the controller 180 controls the display unit 151 in order for the first content unit 310 to disappear, based on a touch input which is applied to another region of the display unit 151 in addition to the first content unit 310. According to an embodiment of the present invention, while selected content is being displayed, an image of other content may be selected, and a plurality of contents may be selected and displayed.

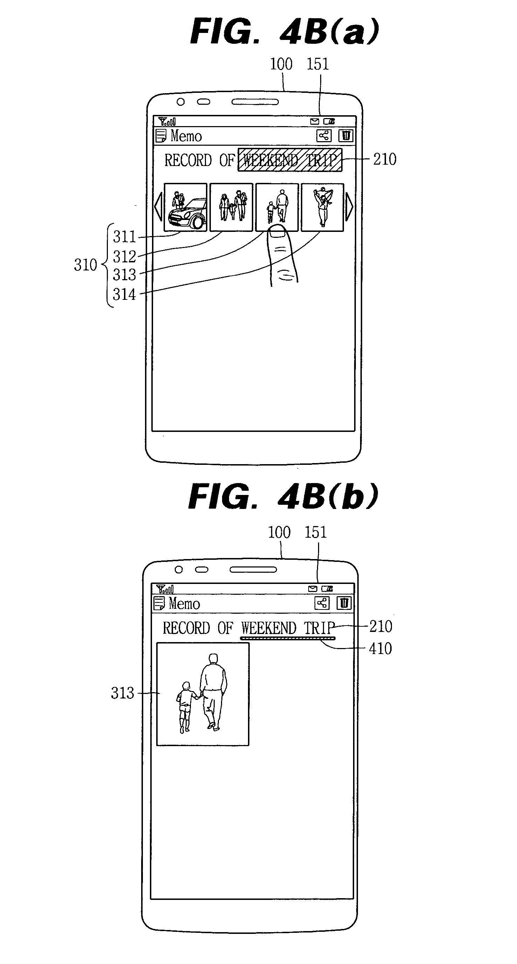

A method of outputting content associated with text will be described in detail with reference to FIGS. 4B(a) and 4B(b). Based on a touch input which is applied to the content, the controller 180 selects some of text, and controls the display unit 151 so as to display the first content unit 310 associated with the selected text. The controller 180 controls the display unit 151 so as to display the third content 313 in a region adjacent to the text, based on a touch input applied to the image of the third content 313.

Moreover, the controller 180 controls the display unit 151 so as to display a first indicator 410 to be adjacent to a portion of the selected content. The first indicator 410 may be displayed as an underline under the selected text. However, a shape of the first indicator 410 is not limited thereto. For example, a font of the selected text may be changed, or the selected text may be highlighted. Therefore, a text associated with displayed content may be recognized through an indicator.

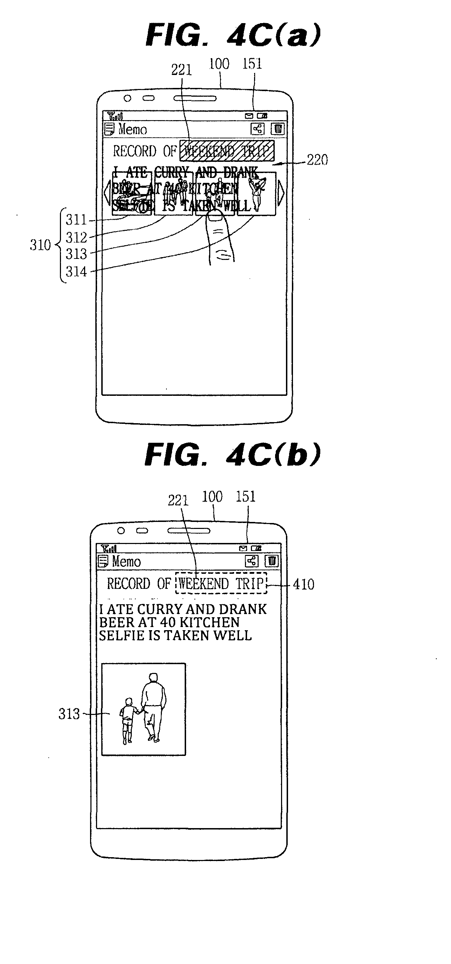

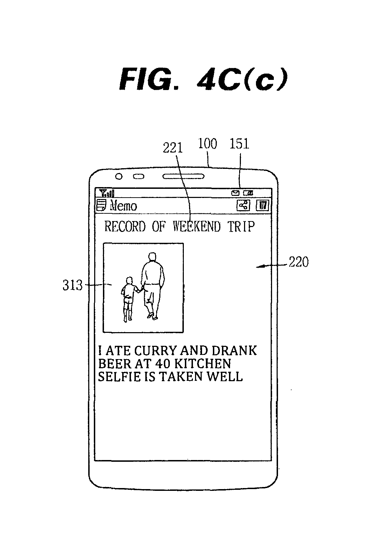

A method of outputting the text according to another embodiment will be described in detail with reference to FIGS. 4C(a) through 4C(c). Referring to FIG. 4C(A), the display unit 151 displays text including a plurality of rows. For example, the text may include four rows. The controller 180 controls the display unit 151 so as to display first content unit 310 associated with a first text 221 which is selected from among the text composed of the plurality of rows.

Referring to FIGS. 4C(a) and 4C(b), the controller 180 controls the display unit 151 so as to display the third content 313, based on a touch input which is applied to the image of the third content 313. The display unit 151 displays the third content 313 under the text composed of the plurality of rows. That is, the third content 313 is displayed at a position separated from the selected first text 221.

Moreover, the controller 180 can control the display unit 151 so as to display the first indicator 410 on the first text associated with the third content 313. According to an embodiment of the present invention, even when a selected text and content are displayed to be separated from each other, a user may recognize the text associated with the content.

Referring to FIGS. 4C(a) and 4C(c), the controller 180 controls the display unit 151 so as to display the third content 313 to be adjacent to the selected first text 221 of the text 220 composed of the plurality of rows. For example, the third content 313 may be displayed under the first text 221. In order to provide a sufficient space for the third content 313 next to the first text 221, the rest of the text 220 may be moved to a different position, e.g., a lower position than where the rest of the text 220 was originally positioned. In accordance with one embodiment, the third content 313 may be controlled to move next to the first text 221 upon selection of the third content 313 without the user's further input to indicate the new position of the third content 313. The rest of the text 220 may also be automatically moved to the lower position upon selection of the third content 313.

In more detail, when a plurality of contents corresponding to a plurality of text is selected, the controller 180 can control the display unit 151 so as to display each of the plurality of contents to be adjacent to a corresponding text among the selected text.

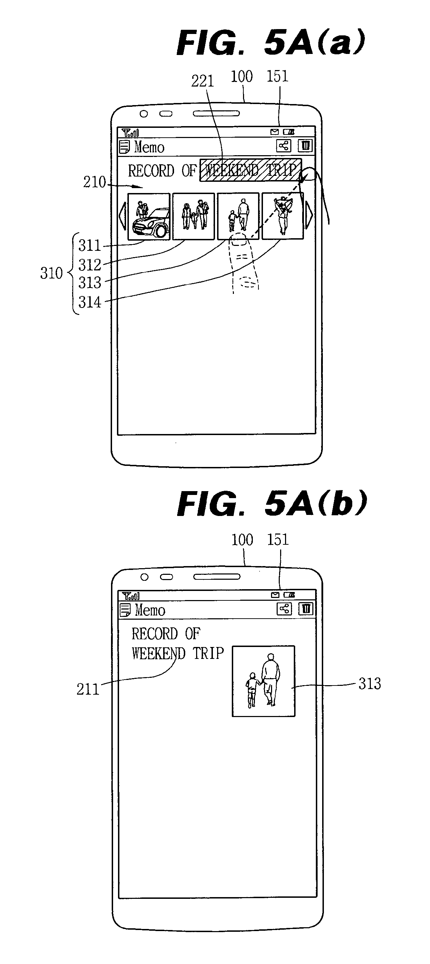

FIGS. 5A(a) through 5B(c) are conceptual diagrams illustrating a method of outputting content, according to another embodiment. Referring to FIG. 5A (a), the controller 180 designates a position in which the content is displayed, based on a touch input applied to an image of the content. The controller 180 controls the display unit 151 so as to display the third content 313 at a position in which the touch input, which is first applied to the image of the third content 313, is released. Referring to FIGS. 5A(a) through 5A(b), the controller 180 controls the display unit 151 so as to display the third content 313, based on a touch input which is released between the text 210.

That is, the third content 313 may be moved to a position where a drag input on the third content 313 is released, e.g., between portions of the text 220. Therefore, a user may select content associated with a selected text, based on a continuous touch input applied to the display unit 151, and select a position for displaying the content.

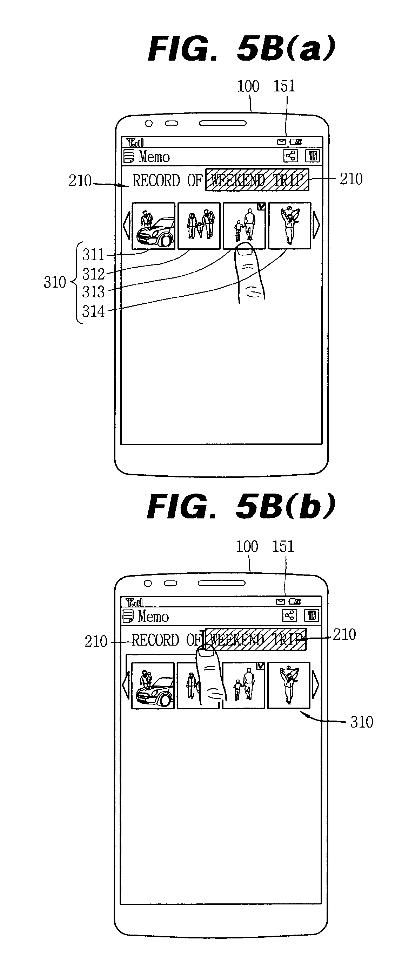

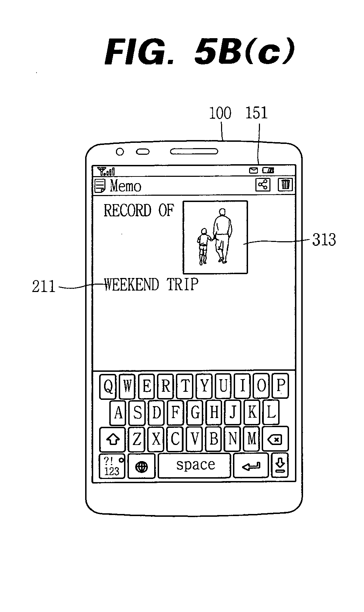

Referring to FIGS. 5B(a) through 5B(c), a position for displaying the content may be designated based on an additional touch input. The controller 180 selects content which is to be displayed by the display unit 151, based on a touch input applied to the first content unit 310. The controller 180 controls the display unit 151 so as to display the mark portion on the image of the selected third content 313.

The controller 180 can select the third content 313, based on the touch input. The controller 180 can designate a position for displaying the third content 313, based on a touch input which is applied to the display unit 151 after the third content 313 is selected. In accordance with one embodiment, the first touch input on the third content 313 for selection and the second touch input on the display unit 151 to designate a position for moving the third content 313 may be separate touch inputs.

The controller 180 designates a position in which the content is displayed between the text 210, based on an additional touch input applied to the text 210. The control unit controls the display unit 151 so as to display the third content 313 at the designated position, based on the additional touch input.

According to the present embodiment, the user may select content which is to be displayed, based on a touch input, and designate a position for displaying the content.

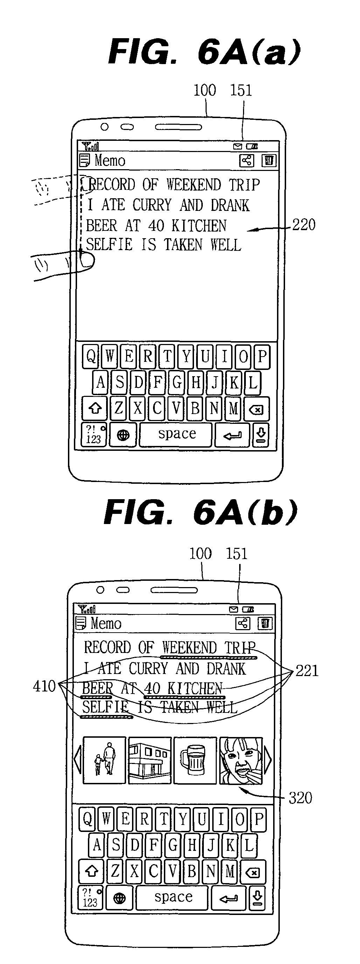

FIGS. 6A(a) through 6D(b) are conceptual diagrams illustrating a control method of outputting content associated with a text, according to another embodiment. A control method of selecting text composed of a plurality of rows will be described in detail with reference to FIG. 6A. Referring to FIG. 6A(a), the controller 180 selects text composed of a plurality of rows, based on a continuous touch input. For example, the touch input may correspond to a dragging type touch input which is continuously applied in a direction where the text composed of the plurality of rows are arranged. That is, at least some of the plurality of rows may be selected based on a touch range in which the continuous touch input is applied.

Referring to FIG. 6A(B), the controller 180 controls the display unit 151 so as to display a second content unit 320 including content based on at least one of text included in the selected rows. The content may correspond to content associated with some words of the selected text, or correspond to content a sentence or a paragraph, which composes the text. In accordance with one embodiment, in response to the user's drag input along one side of the paragraph of the text 220, at least one of the words, phrases, and sentences included in the text 220 may be selected for content search.

The controller 180 controls the display unit 180 so as to display the first indicator 410 in a plurality of text 221 associated with searched content. The second content unit 320 may be composed of images of content associated with the selected plurality of text. A plurality of images included in the second content unit 320 may be arranged in order where the selected plurality of text is displayed, but the present embodiment is not limited thereto.

According to the present embodiment, a user may select a number of text at one time, and may be provided with content associated with a text extracted from the selected text.

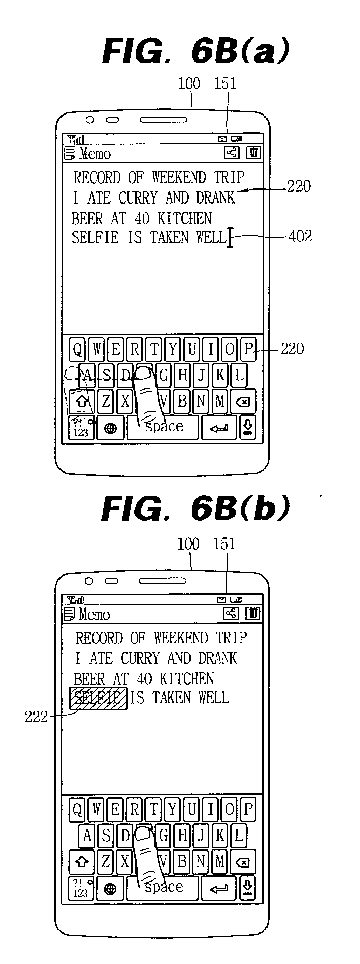

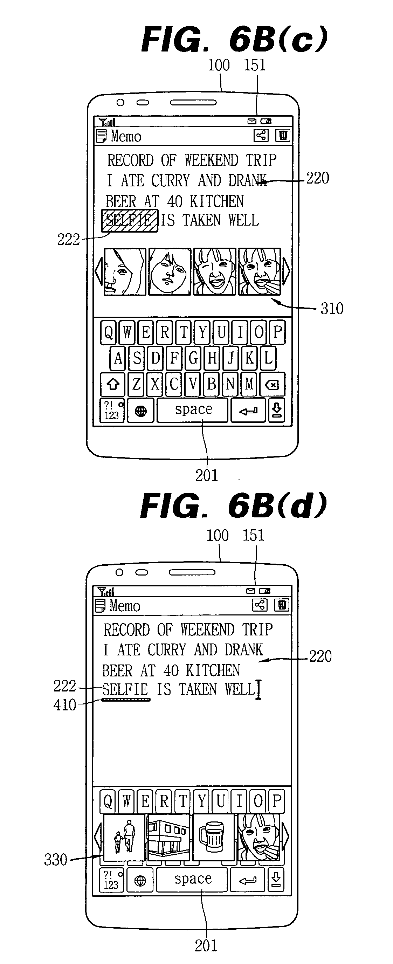

A control method of providing text based on a touch input applied to a virtual keyboard will be described in detail with reference to FIGS. 6B(a) through 6B(d). The display unit 151 displays a virtual keyboard 201 that receives a touch input for inputting text. Also, the display unit 151 displays a cursor 402 which indicates a position of the display unit 151 for displaying the text.

The controller 180 selects a second text 222 of the text, based on a continuous touch input applied to the virtual keyboard 201. The controller 180 selects at least some of text which are displayed on a row in which the cursor 402 is displayed, based on the continuous touch input applied to a specific touch range.

The second text 222 corresponds to the touch range in the plurality of text. When a touch input is continuously applied to the virtual keyboard 201, the controller 180 selects a text of the row where the cursor 401 is displayed, without outputting the characters corresponding to the touched keys of the virtual keyboard 201. In accordance with one embodiment, when a touch input is applied to the keys "A" to "F" on the virtual keyboard 201, the text "SELFIE," corresponding to the range of the touched keys on the virtual keyboard 201, may be selected from the row of the text 220 where the cursor 402 is positioned.

Referring to FIGS. 6B (b) and 6B(c), the controller 180 controls the display unit 151 so as to display a third content unit 330 including content associated with the second text 222, based on a touch input applied to the virtual keyboard 201. The controller 180 can control the display unit 151 so as to display the third content unit 330 to be adjacent to the text 220. Also, when the third content unit 330 is displayed, the controller 180 controls the display unit 151 so as to limit an output of the virtual keyboard 201.

Referring to FIGS. 6B(b) and 6B(d), the controller 180 controls the display unit 151 so as to display the third content unit 330 on the virtual keyboard 201, based on the touch input. When the third content unit 330 is displayed, the controller 180 controls the display unit 151 so as to ignore the touch input applied to the virtual keyboard 201. In this instance, the display unit 151 displays the first indicator 410 on the second text 222 associated with the third content unit 330. The controller 180 controls the display unit 151 in order for the third content unit 330 to disappear, based on the touch input applied to the virtual keyboard 201.

According to the present embodiment, based on a continuous touch input applied to the virtual keyboard, some of text displayed by the display unit 151 are selected, and relevant content is provided. Accordingly, by using the virtual keyboard, a user may input a text, and select a text.

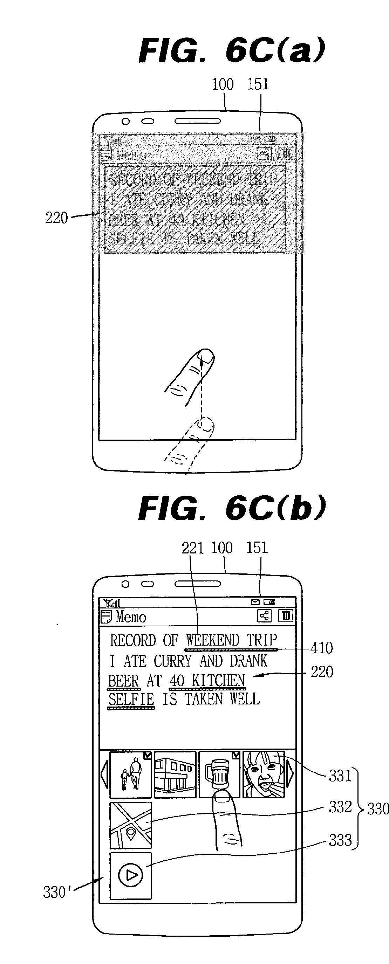

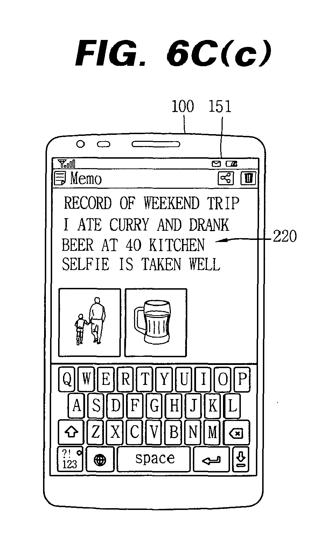

A control method of selecting a text and providing content according to another embodiment will be described in detail with reference to FIGS. 6C(a) through 6C(c). Referring to FIGS. 6C(a) and 6C(b), while the text 220 are being displayed by the display unit 151, the controller 180 selects the text 220, based on a touch input applied to an edge of the display unit 151. For example, a touch input applied to the edge corresponds to a continuous touch input which is applied from the edge to the center of the display unit 151.

The controller 180 controls the display unit 151 so as to generate a content region 330' in which the third content unit 330 is displayed, based on the touch input. The content region 330' is generated to correspond to a touch range of the touch input. The controller 180 selects all of the text, based on the touch input, and searches for content associated with at least some of the text. The display unit 151 may display the first indicator 410 on at least some content.

The controller 180 controls the display unit 151 so as to display the relevant third content unit 330 in the content region 330'. The third content unit 330 may include data of a plurality of categories. For example, the third content unit 330 may include an image 331 stored in the memory 170, a map image 332 which is searched by using a text, and a media file 333. A plurality of contents included in the third content unit 330 may be listed by category, but the present embodiment is not limited thereto. In one embodiment, the searched contents may be sorted by the categories (e.g., images, maps, text, and media files) and listed in separate groups.

The controller 180 displays content, which is selected based on a touch input applied to the third content unit 330, in the display unit 151, and controls the display unit 151 so as to delete the content region 330'. Therefore, a text displayed by the display unit 151 may be selected based on a touch input, and a plurality of contents sorted into a plurality of categories may be provided.

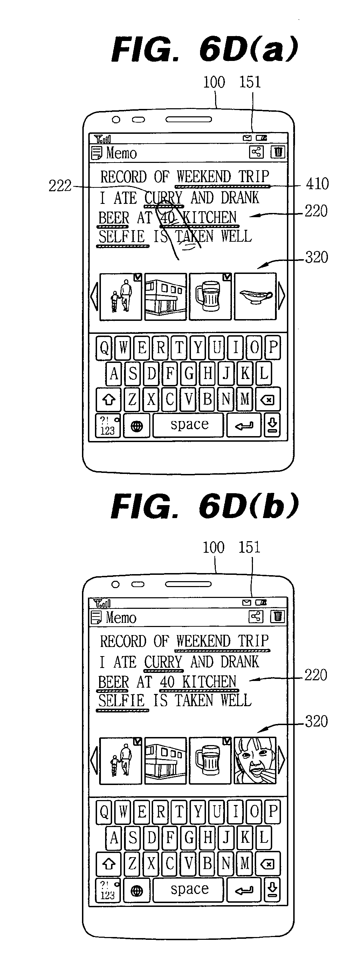

A control method of releasing a selected text will be described in detail with reference to FIGS. 6D(a) and 6D(b). The display unit 151 displays the first indicator 410 on a plurality of text which are selected based on a touch input, and the controller 180 controls the display unit 151 so as to display the second content unit 320 including content associated with the plurality of text.

Referring to FIGS. 6D(a) and 6D(b), the controller 180 can release the selection of the text, based on a touch input applied to the selected text. For example, the display unit 151 may display the first indicator 410 on a second text 222 corresponding to 'curry', and display content associated with the curry.

When a touch input is applied to the second text 222 corresponding to the 'curry' or the first indicator 410 which is displayed adjacent to the second text 222, the controller 180 controls the display unit 151 so as to delete the first indicator 410. Also, the selection of the second text 222 is released, and the controller 180 controls the display unit 151 so as to delete an image of content associated with the second text 222.

According to the present embodiment, a user may release selection by applying a touch input to a selected text, and an output of the content may be automatically limited based on the release of the selection. Therefore, the user may be provided with only desired content.

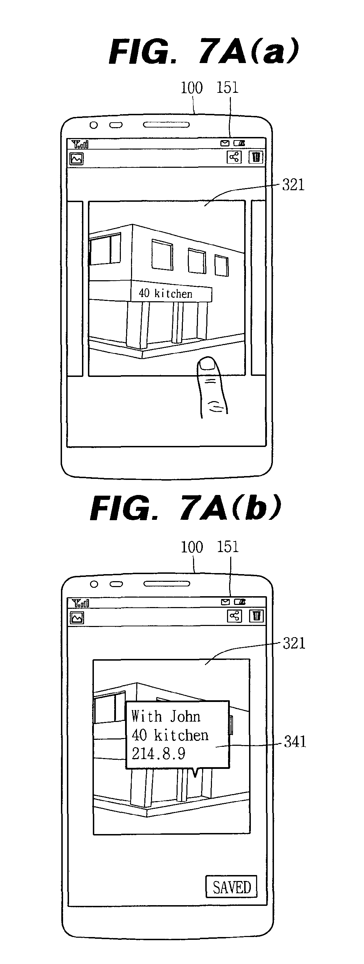

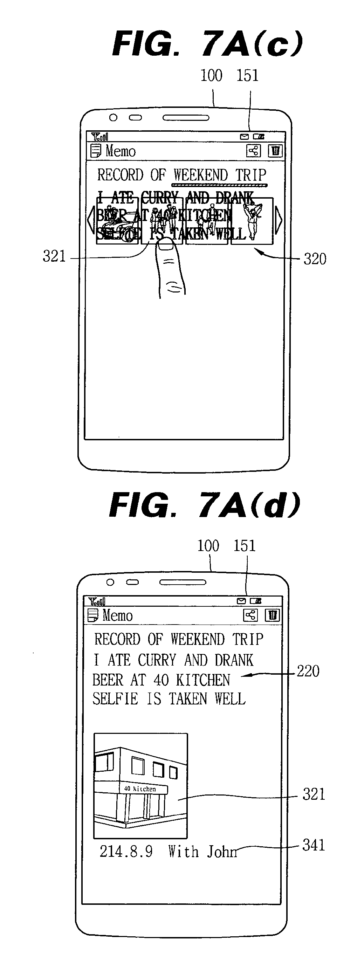

FIGS. 7A(a) through 7B(d) are conceptual diagrams illustrating a method of providing additional content, according to another embodiment. A control method of providing additional information included in content will be described in detail with reference to FIGS. 7A(a) through 7A(d). Referring to FIGS. 7A(a) and 7A(b), the controller 180 can tag additional information 341 along with an image stored in the memory 170. For example, when the additional information 341 corresponds to a photograph obtained by a camera 121, the additional information 341 may include at least one of date at which the photograph is obtained, a place, and an explanation of the photograph. The additional information 341 may be automatically stored by the mobile terminal 100, or may be input by a user.

Referring to FIG. 7A (c), the controller 180 controls the display unit 151 so as to display the second content unit 320 associated with a selected text, based on a user's touch input. The controller 180 controls the display unit 151 so as to display the image 321, based on a touch input applied to the second content 320. Also, the display unit 151 displays the additional information 341 which is stored (e.g., tagged) along with the image 321. The additional information 341 may be displayed in a region adjacent to the image 321.

That is, the controller 180 can output the content along with additional information associated with the content. In more detail, the controller 180 can limit an output of the additional information according to a user's setting, or based on a touch input applied to the display unit 151, the controller 180 can control the display unit 151 so as to delete the additional information.

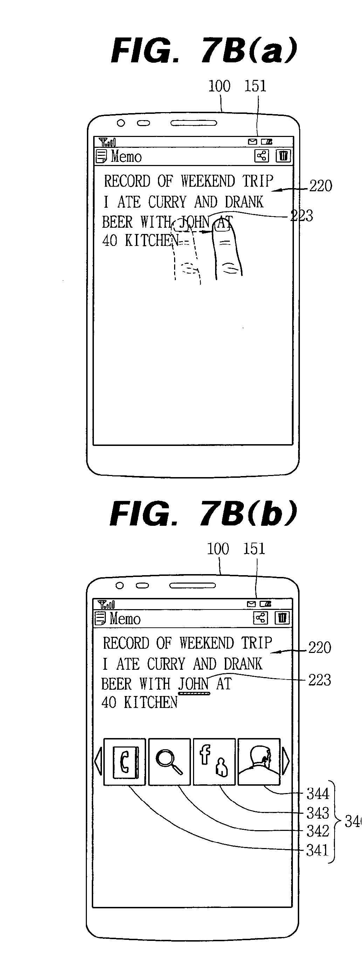

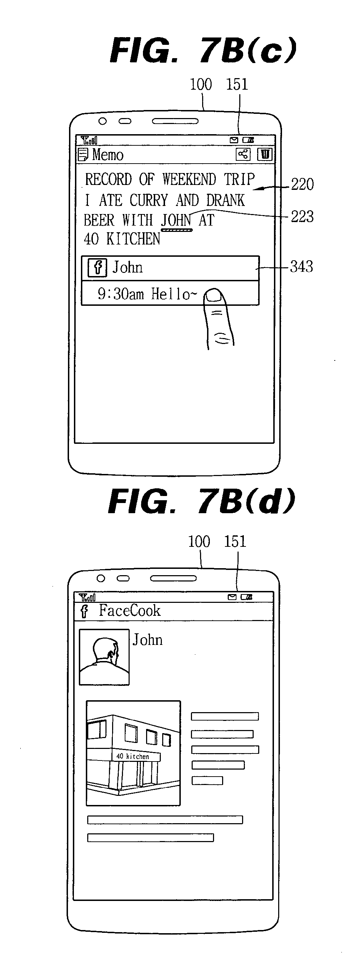

A control method of providing various contents having various categories will be described in detail with reference to FIGS. 7B(a) through 7B(d). Referring to FIG. 7B(a), the controller 180 selects a text 223 included in the second text 222, based on a touch input applied to the display unit 151. For example, the text 223 may correspond to a person's name "John."

When the selected text 223 corresponds to a person's name, the controller 180 controls the display unit 151 so as to display a fourth content unit 340 which includes various contents having various categories. For example, the fourth content unit 340 may include contact information 341 corresponding to the person, a search icon 342 that receives a touch input for searching for the person's name, SNS information 343 associated with the person, and image information 344 including the person. The SNS information may correspond to a notice which is tagged by the person, or is uploaded to a predetermined server according to an account of the person.

Referring to FIG. 7B(b), the controller 180 controls the display unit 151 so as to display the SNS information 343 along with the second text 222, based on a touch input applied to the SNS information 343. The controller 180 executes an application to which the SNS information 343 is uploaded, based on a touch input applied to the SNS information 343. The controller 180 activates the application, and controls the display unit 151 so as to display the SNS information 343.

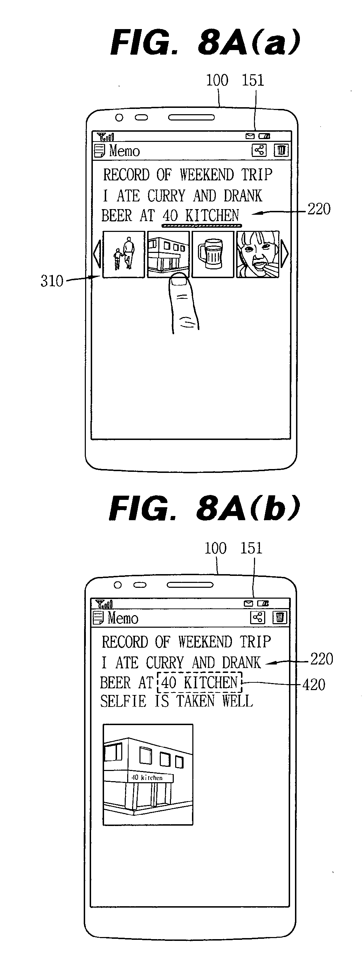

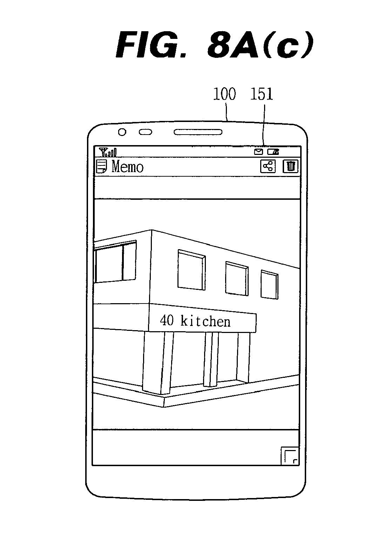

According to the present embodiment, the controller 180 can provide various contents having various categories, based on a characteristic of the selected text. FIGS. 8A(a) through 8B(b) are conceptual diagrams illustrating a control method of displaying a text associated with content. Referring to FIG. 8A, the controller 180 controls the display unit 151 so as to display the content along with the text 220, based on a touch input applied to the third content unit 330. The controller 180 controls the display unit 151 so as to display a second indicator 420 on a text associated with the content.

Referring to FIG. 8A(b) and 8A(c), the controller 180 controls the display unit 151 so as to enlarge and display the content, based on a touch input applied to the second indicator 420. Moreover, the display unit 151 may display a graphic image that receives a touch input, for outputting the text onto the enlarged content.

In more detail, when a plurality of contents are output in association with a plurality of text, the controller 180 controls the display unit 151 so as to sequentially display the plurality of contents, based on a touch input applied to the plurality of contents.

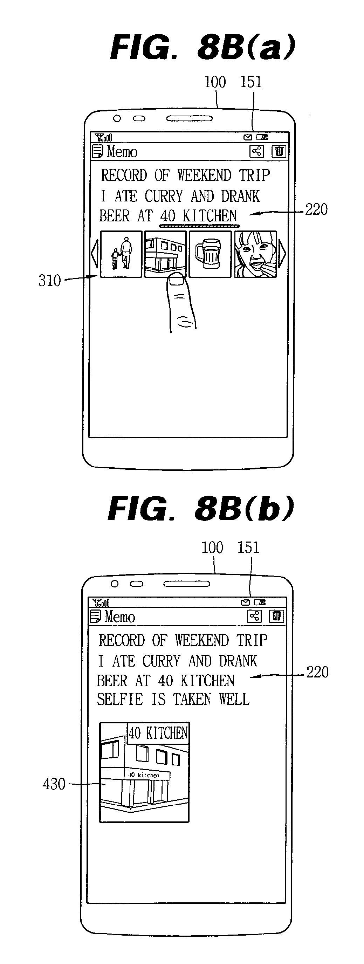

Referring to FIGS. 8B(a) through 8B(b), the controller 180 controls the display unit 151 so as to display the third content unit 330 associated with the selected text. The controller 180 controls the display unit 151 so as to display the selected content along with the text.

Moreover, the display unit displays a third indicator 430, indicating the text, on the content. The third indicator 430 may be composed of the substantially same text as the text. According to the present embodiment, when content is output along with text, a user can recognize which text the content is associated with.

Hereinabove, the control method of displaying the content along with the selected text has been described, but the present embodiment is not limited thereto. According to another embodiment of the present invention, instead of a selected text, content may be displayed. Hereinafter, a control method of converting a text into content will be described in detail.

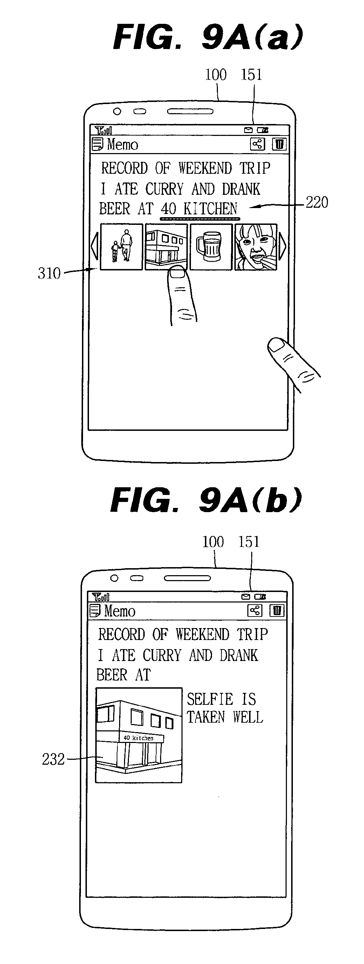

FIGS. 9A(a) through 9C(c) are conceptual diagrams illustrating a control method of outputting content, according to another embodiment. A control method of outputting content according to an embodiment will be described in detail with reference to FIGS. 9A(a) through 9A(b). Referring to FIG. 9A(a), the display unit 151 displays the third content unit 330 including content associated with a selected text.

The controller 180 controls the display unit 151 so as to display the second content 232, based on a predetermined specific touch type of touch input applied to the image of the second content 232. Here, the specific touch type of touch input may correspond to a long touch type touch input which is applied for a long time or plural-time touch input which is applied for a predetermined time.

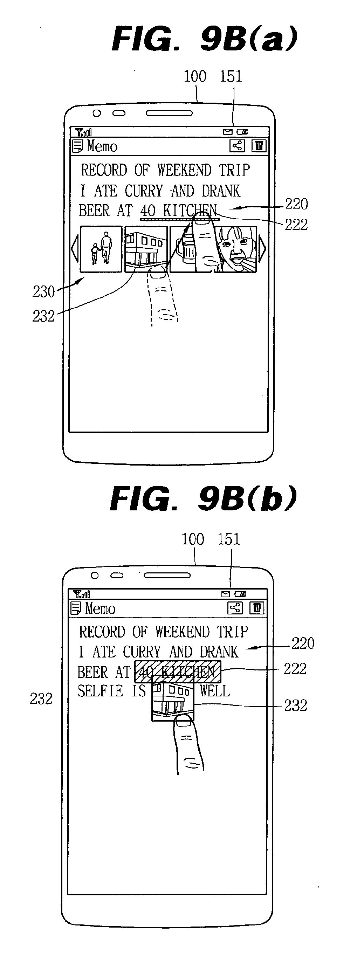

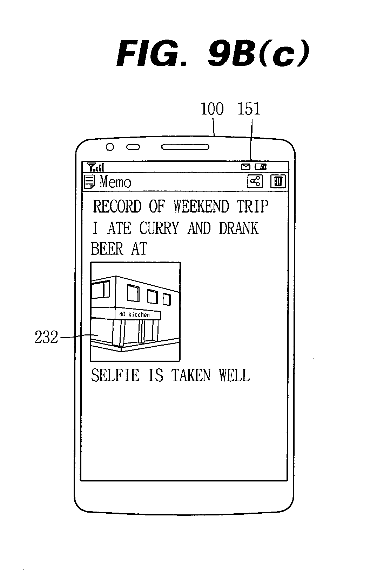

When the specific touch type of touch input is applied, the controller 180 controls the display unit 151 so as to convert the selected text into the second content 232 to which the touch input is applied. A control method of outputting content based on various types of touch inputs will be described in detail with reference to FIGS. 9B(a) through 9B(b). The controller 180 selects the second text 222, based on a touch input, and controls the display unit 151 so as to display the third content unit 330 associated with the second text 222.

The controller 180 selects the second content 232, to which a touch input is applied, of the third content unit 230, and controls the display unit 151 so as to convert the second text 222 into the second content, based on the touch input which is first applied to the second content 232 and is moved to the second text 222.

While the touch input is being applied, the controller 180 controls the display unit 151 so as to change a position in which the second content 232 is displayed, based on a movement of the touch input. When the second content 232 is displayed to overlap the text, the controller 180 controls the display unit 151 so as to highlight a text overlapping the second content 232. When the touch input is released in a state of overlapping some of the text, the controller 180 controls the display unit 151 so as to convert the text, overlapping the second content 232, into the second content 232.

Referring to FIG. 9B(c), the display unit 151 converts the text, associated with the second content 232, into the second content 232, but the present embodiment is not limited thereto. For example, when the touch input is released, the controller 180 can convert the text, which is displayed to overlap the second content 232, into the second content 232. Therefore, a user can output selected content instead of a desired text.

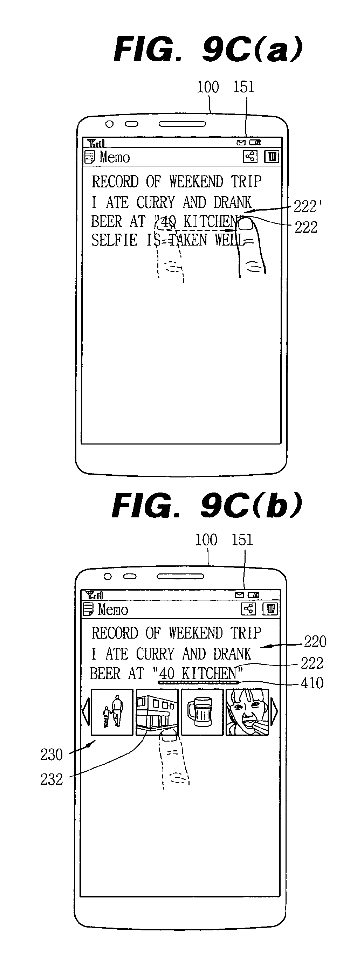

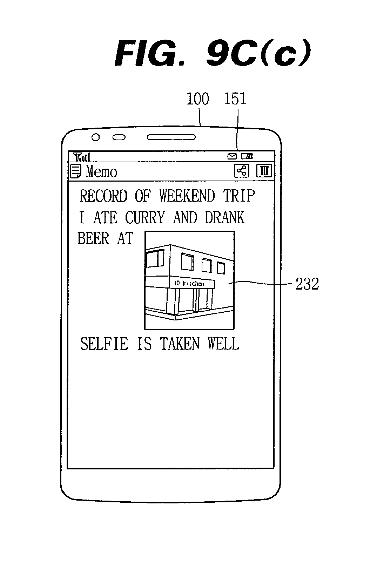

A control method of outputting content according to an input command will be described in detail with reference to FIGS. 9C(a) through 9C(c). The controller 180 selects the second text 222, based on the touch input. The second text 222 is input along with a command 222'. For example, the command 222' may correspond to a predetermined sign (for example, " ") which is displayed with the selected text 222 therebetween, or correspond to a word (for example, search) which is input to a front side or a rear side of the second text 222.

The controller 180 controls the display unit 151 so as to display the third content unit 330 associated with the selected content 222. Therefore, when desiring to convert a text into content, a user can simply output the text as the content by inputting the text along with a command.

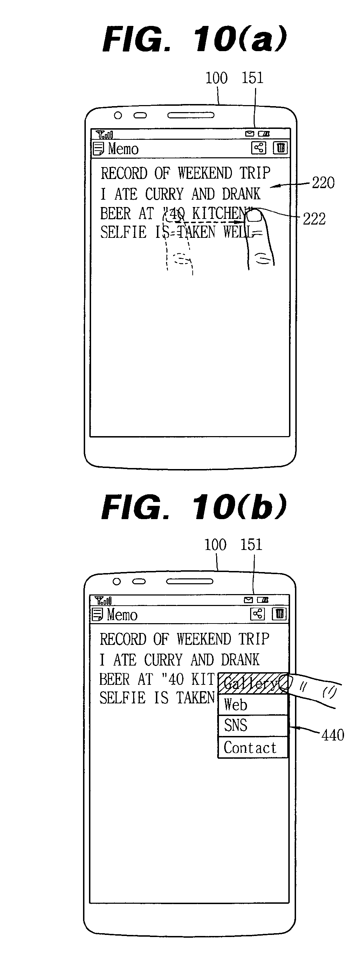

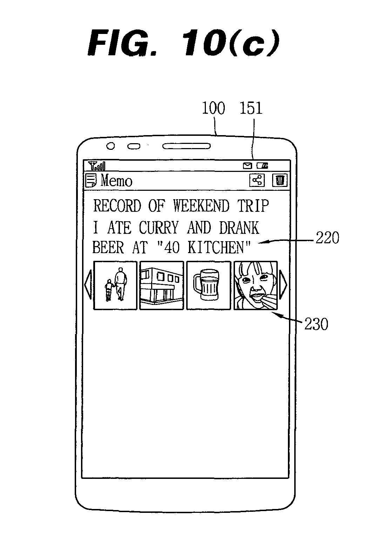

FIGS. 10(a) through 10(c) is a conceptual diagram illustrating a control method of providing content, according to another embodiment. When the second text 222 is selected from among the text based on the touch input, the controller 180 controls the display unit 151 so as to display a control window 440 for selecting a category of the content. For example, the control window 440 may include, as the category of the content, an image stored in a storage space of a gallery application stored in the memory 170, information which is searched on the Web, SNS information, and contact data, but the present embodiment is not limited thereto.

The controller 180 controls the display unit 151 so as to display the third content unit 330 including content corresponding to a selected category, based on a touch input applied to the control window 440. Therefore, a user is provided with content having a desired category among a plurality of contents associated with text.

According to the embodiments of the present invention, the mobile terminal searches for content associated with a selected text, and provides the searched content along with the text. That is, an operation which ends an activated application or executes another application is not performed for searching for relevant content. Accordingly, a user can more simply search for desired content, and input the searched content along with a text.

The foregoing embodiments and advantages are merely and are not to be considered as limiting the present invention. The present teachings can be readily applied to other types of apparatuses. This description is intended to be illustrative, and not to limit the scope of the claims. Many alternatives, modifications, and variations will be apparent to those skilled in the art. The features, structures, methods, and other characteristics of the embodiments described herein may be combined in various ways to obtain additional and/or alternative embodiments.

As the present features may be embodied in several forms without departing from the characteristics thereof, it should also be understood that the above-described embodiments are not limited by any of the details of the foregoing description, unless otherwise specified, but rather should be considered broadly within its scope as defined in the appended claims, and therefore all changes and modifications that fall within the metes and bounds of the claims, or equivalents of such metes and bounds are therefore intended to be embraced by the appended claims.

## Claims

1. A mobile terminal comprising:
a user input device configured to receive an input of text;
a display configured to display the text and receive a touch input for selecting at least part of the text; and
a controller configured to, in response to selection of the at least part of the text, search for at least one content associated with the selected at least part of the text and to control the display to display a content region including the searched at least one content adjacent the touch input.

2. The mobile terminal of claim 1, wherein the content region is displayed adjacent to a region in which the touch input is released in the display.

3. The mobile terminal of claim 1, wherein the touch input corresponds to a touch which is continuously applied to one region of the display in which the text is displayed.

4. The mobile terminal of claim 3, wherein the controller is further configured to display a first indicator onto the selected text according to the touch input applied on the display.

5. The mobile terminal of one of any claims 1 to 4, wherein:
the text is provided in a plurality of rows arranged along a predetermined output direction, and
the controller is further configured to select at least one of the plurality of rows, based on the touch input applied along the predetermined output direction.

6. The mobile terminal of claim 5, wherein:
the controller is further configured to select a plurality of text and control the display to display a plurality of contents respectively associated with the plurality of text, and
the controller is further configured to display a first indicator on portions of the plurality of text corresponding to the plurality of contents.

7. The mobile terminal of claim 1, wherein:
the display is further configured to display a virtual keyboard for receiving a touch of a user, for inputting the text, and
when a continuous touch input is applied to the virtual keyboard, the controller is further configured to select a portion of the text corresponding to a touch range of the continuous touch input.

8. The mobile terminal of claim 7, wherein the controller is further configured to control the display so that the content region is displayed to overlap a portion of the virtual keyboard.

9. The mobile terminal of claim 1, wherein:
when a continuous touch input is applied in one direction from an edge to a center of the display, the controller is further configured to select all of the text and generate a content area in one region of the display, and
the controller is further configured to control the display to display the content region, including a plurality of contents, in the content area.

10. The mobile terminal of claim 9, wherein when a continuous touch input which is moved in a direction opposite to the one direction is applied, the controller is further configured to control the display to remove the content area from the display.

11. The mobile terminal of claim 1, wherein the at least one content is associated with the selected part of the text, and includes at least one of an image, a video, contact information, and a document, and
wherein the controller is further configured to control the display to display the at least one content sorted by the at least one of the image, the video, the contact information, and the document.

12. The mobile terminal of one of any claims 1 to 11, further comprising a memory configured to store at least one of the image, the video, the contact information, and the document, or a wireless communication device configured to wirelessly communicate with a predetermined server, for receiving at least one of the image, the video, the contact information, and the document.

13. The mobile terminal of claim 11, wherein the controller is further configured to control the display to display the at least one content along with additional information, which is stored in the memory along with the at least one content, or additional information tagged to the at least one content.

14. The mobile terminal of claim 1, wherein:
the controller is further configured to select one of the at least one content, based on a touch selection input applied to the content region, and
the controller is further configured to control the display to display the selected content along with the text, based on the touch selection input.

15. A method of controlling a mobile terminal, the method comprising:
receiving an input of text;
displaying the text in a display unit;
receiving a touch input for selecting at least part of the text;
searching for at least one content associated with the selected at least part of the text; and
displaying a content region including the searched at least one content and configured to receive a touch selection input, adjacent the touch input on the display unit.

## Amended claims

### Amended claims in accordance with Rule 137(2) EPC.

1. A mobile terminal comprising:
a memory (170);
a user input device (123) configured to receive an input of text;
a display (151) configured to display the text (210, 220) and receive a touch input for selecting text (221) composed of a plurality of rows; and
a controller configured to
in response to selection of the text, search for at least one content associated with at least one of words, phrases, and sentences included in the selected text (221) from the memory (170);
display a content region (320) including the searched at least one content adjacent the touch input; and
display at least one indicator (410) adjacent to the at least one of the words, phrases, and sentences associated with the at least one content searched from the memory (170).

2. The mobile terminal of claim 1, wherein the content region is displayed adjacent to a region in which the touch input is released in the display.

3. The mobile terminal of claim 1, wherein the touch input corresponds to a touch which is continuously applied to one region of the display in which the text is displayed.

4. The mobile terminal of one of any claims 1 to 3, wherein:
the text is provided in a plurality of rows arranged along a predetermined output direction, and
a touch input is applied along the predetermined output direction.

5. The mobile terminal of claim 1, wherein:
the display is further configured to display a virtual keyboard for receiving a touch of a user, for inputting the text, and
when a continuous touch input is applied to the virtual keyboard, the controller is further configured to select a portion of the text corresponding to a touch range of the continuous touch input.

6. The mobile terminal of claim 5, wherein the controller is further configured to control the display so that the content region is displayed to overlap a portion of the virtual keyboard.

7. The mobile terminal of claim 1, wherein:
when a continuous touch input is applied in one direction from an edge to a center of the display, the controller is further configured to select all of the text and generate a content area in one region of the display, and
the controller is further configured to control the display to display the content region, including a plurality of contents, in the content area.

8. The mobile terminal of claim 7, wherein when a continuous touch input which is moved in a direction opposite to the one direction is applied, the controller is further configured to control the display to remove the content area from the display.

9. The mobile terminal of claim 1, wherein the at least one content is associated with the selected part of the text, and includes at least one of an image, a video, contact information, and a document, and
wherein the controller is further configured to control the display to display the at least one content sorted by the at least one of the image, the video, the contact information, and the document.

10. The mobile terminal of one of any claims 1 to 9, wherein the memory is configured to store at least one of an image, a video, a contact information, and a document, or wherein the mobile terminal further comprises a wireless communication device configured to wirelessly communicate with a predetermined server, for receiving at least one of the image, the video, the contact information, and the document.

11. The mobile terminal of claim 9, wherein the controller is further configured to control the display to display the at least one content along with additional information, which is stored in the memory along with the at least one content, or additional information tagged to the at least one content.

12. The mobile terminal of claim 1, wherein:
the controller is further configured to select one of the at least one content, based on a touch selection input applied to the content region, and
the controller is further configured to control the display to display the selected content along with the text, based on the touch selection input.

13. A method of controlling a mobile terminal, the method comprising:
receiving (S201) an input of text;
displaying (S202) the text in a display unit;
receiving (S202) a touch input for selecting text (221) composed of a plurality of rows;
searching (S203) for at least one content associated with at least one of words, phrases, and sentences included in the selected text (221) from the memory (170);
displaying (S204) a content region including the searched at least one content and configured to receive a touch selection input, adjacent the touch input on the display unit; and
displaying at least one indicator (410) adjacent to the at least one of the words, phrases, and sentences associated with the at least one content searched from the memory.
